(19) Europäisches Patentamt
European Patent Office
Office européen des brevets

(11) EP 4 310 720 A1

(12) EUROPEAN PATENT APPLICATION

(43) Date of publication:
**24.01.2024 Bulletin 2024/04**

(21) Application number: **23183224.7**

(22) Date of filing: **04.07.2023**

(51) International Patent Classification (IPC):
***G06F 30/27*** *(2020.01)* ***G06F 30/39*** *(2020.01)*
*G06F 119/18* *(2020.01)* *G06F 119/22* *(2020.01)*

(52) Cooperative Patent Classification (CPC):
**G06F 30/39; G06F 30/27;** G06F 2119/18; G06F 2119/22

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.07.2022 KR 20220090744**

(71) Applicant: **Samsung Electronics Co., Ltd.**
**Suwon-si, Gyeonggi-do 16677 (KR)**

(72) Inventors:
- **NAM, Yunjun**
  **16677 Suwon-si (KR)**
- **KANG, Bogyeong**
  **16677 Suwon-si (KR)**
- **MOON, Hyowon**
  **16677 Suwon-si (KR)**
- **CHOI, Byungseon**
  **16677 Suwon-si (KR)**
- **CHOE, Jaemyung**
  **16677 Suwon-si (KR)**
- **JANG, Hyunjae**
  **16677 Suwon-si (KR)**
- **HUH, In**
  **16677 Suwon-si (KR)**

(74) Representative: **Marks & Clerk LLP**
**15 Fetter Lane**
**London EC4A 1BW (GB)**

# (54) MODELING METHOD OF NEURAL NETWORK FOR SIMULATION IN SEMICONDUCTOR DESIGN PROCESS, AND SIMULATION METHOD IN SEMICONDUCTOR DESIGN PROCESS USING THE SAME

(57) In a modelling method of a neural network, a first regression model is trained (S140) based on first sample data (S120) and first simulation result data (S130). The first regression model is used to predict the first simulation result data from the first sample data. The first sample data represent at least one of conditions of a manufacturing process of a semiconductor device and characteristics of the semiconductor device. The first simulation result data are obtained by performing a simulation on the first sample data (S130). In response to a consistency of the first regression model being lower than a target consistency (S150), the first regression model is re-trained based on second sample data different from the first sample data (S210). The second sample data are associated with a consistency reduction factor of the first regression model that is responsible for a prediction failure of the first regression model.

FIG. 6

START
SET SIMULATION TARGET AND ANALYSIS RANGE
S110
GENERATE SAMPLE DATA
S120
PERFORM SIMULATION
S130
TRAIN FIRST REGRESSION MODEL
S140
S210
GENERATE ADDITIONAL SAMPLE DATA
S150
CHECK CONSISTENCY
FAIL
PASS
END

EP 4 310 720 A1

## Description

BACKGROUND

1. Technical Field

Example embodiments relate generally to semiconductor integrated circuits, and more particularly to modeling methods of neural networks for simulation in semiconductor design process, simulation methods in semiconductor design process using the modeling methods, manufacturing methods of semiconductor devices using the modeling methods, and semiconductor design systems performing the modeling methods and/or the simulation methods.

2. Description of the Related Art

As higher integration and/or miniaturization of semiconductors have progressed, factors in each operation of designing and manufacturing semiconductor devices may interact in a complex manner, which may cause various unintended electrical characteristics of the semiconductor devices. In order to overcome limitations of semiconductor processes and devices, to understand phenomena, and/or to reduce experimental costs, demand for a technology computer aided design (TCAD) process-device simulation environment based on a physical simulation has been increasing. Further, in order to provide more precise product specifications of a semiconductor device, it may be advantageous to predict and/or simulate the characteristics of the semiconductor device. The TCAD may be used to simulate a semiconductor device, may be used to perform a simulation method in a semiconductor design process, and may be used to simulate a circuit of a semiconductor device.

SUMMARY

At least one example embodiment of the present disclosure provides a modeling method of a neural network capable of more efficiently and/or automatically training the neural network for simulation in a semiconductor design process.

At least one example embodiment of the present disclosure provides a simulation method in a semiconductor design process using the modeling method, and a manufacturing method of a semiconductor device using the modeling method.

At least one example embodiment of the present disclosure provides a semiconductor design system performing the modeling method and/or the simulation method.

According to example embodiments, in a modeling method of a neural network, the modeling method is performed by executing program code by at least one processor. The program code may be stored in a transitory or non-transitory computer readable medium. A first regression model is trained based on first sample data and first simulation result data. The first regression model is used to predict the first simulation result data from the first sample data. The first sample data represent at least one of conditions of a manufacturing process of a semiconductor device and characteristics of the semiconductor device. The first simulation result data are obtained by performing a simulation on the first sample data. In response to a consistency of the first regression model being lower than a target consistency, the first regression model is re-trained based on second sample data different from the first sample data. The second sample data are associated with a consistency reduction factor of the first regression model that is responsible for a prediction failure of the first regression model.

According to example embodiments, a simulation method performed is by executing program code by at least one processor. The program code may be stored in a transitory or non-transitory computer readable medium. A data collection operation and a training operation are performed to generate a first regression model used in a semiconductor design process. An inference operation is performed based on the generated first regression model. When performing the data collection operation and the training operation, the first regression model is trained based on first sample data and first simulation result data. The first regression model is used to predict the first simulation result data from the first sample data. The first sample data represent at least one of conditions of a manufacturing process of a semiconductor device and characteristics of the semiconductor device. The first simulation result data are obtained by performing a simulation on the first sample data. In response to a consistency of the first regression model being lower than a target consistency, the first regression model is re-trained based on second sample data different from the first sample data. The second sample data are associated with a consistency reduction factor of the first regression model that is responsible for a prediction failure of the first regression model.

According to example embodiments, a semiconductor design system includes at least one processor and computer readable medium. The computer readable medium stores program code executed by the at least one processor to generate a first regression model used in a semiconductor design process. The computer readable medium may be transitory or non-transitory. The at least one processor, by executing the program code, trains the first regression model based on first sample data and first simulation result data, and re-trains the first regression model based on second sample data different from the first sample data in response to a consistency of the first regression model being lower than a target consistency. The first regression model is used to predict the first simulation result data from the first sample data. The first sample data represent at least one of conditions of a manufacturing process of a semiconductor device and characteristics of the semiconductor device. The first simulation result data are obtained by performing a simulation on the first sample data. The second sample data are associated with a consistency reduction factor of the first regression model that is responsible for a prediction failure of the first regression model.

According to example embodiments, in a modeling method of a neural network, the modeling method is performed by executing program code by at least one processor. The program code may be stored in a transitory or non-transitory computer readable medium. A simulation target and an analysis range associated with a semiconductor device are set. First sample data are generated within the analysis range. The first sample data represent at least one of conditions of a manufacturing process of the semiconductor device and characteristics of the semiconductor device. First simulation result data are obtained by performing a simulation on the first sample data based on a technology computer aided design (TCAD). A first regression model is trained based on the first sample data and the first simulation result data. The first regression model is used to predict the first simulation result data from the first sample data. A consistency of the first regression model is checked by obtaining first prediction data based on the first regression model and the first sample data, by calculating the consistency of the first regression model based on the first prediction data and the first simulation result data, and by comparing the consistency of the first regression model with a target consistency. In response to the consistency of the first regression model being lower than the target consistency, second sample data different from the first sample data are obtained. The second sample data are associated with a consistency reduction factor of the first regression model that is responsible for a prediction failure of the first regression model. Second simulation result data are obtained by performing a simulation on the second sample data based on the TCAD. The first regression model is re-trained such that the first and second simulation result data are predicted from the first and second sample data. The second sample data are obtained by performing at least one of an active sampling and a balanced sampling. The active sampling is performed using a second regression model different from the first regression model. The second regression model is used to predict first error data representing errors between the first simulation result data and the first prediction data. The balanced sampling is performed using a sparse interval in a first histogram of the first simulation result data. The sparse interval represents an interval in which a number of simulation result data is less than a reference number.

According to example embodiments, in a manufacturing method of a semiconductor device, a simulation is performed on the semiconductor device by executing program code by at least one processor. The program code is stored may be stored in a transitory or non-transitory computer readable medium. The semiconductor device is fabricated based on a result of the simulation on the semiconductor device. When performing the simulation, a data collection operation and a training operation are performed to generate a first regression model used in a semiconductor design process. An inference operation is performed based on the generated first regression model. When performing the data collection operation and the training operation, the first regression model is trained based on first sample data and first simulation result data. The first regression model is used to predict the first simulation result data from the first sample data. The first sample data represent at least one of conditions of a manufacturing process of the semiconductor device and characteristics of the semiconductor device. The first simulation result data are obtained by performing a simulation on the first sample data. In response to a consistency of the first regression model being lower than a target consistency, the first regression model is re-trained based on second sample data different from the first sample data. The second sample data are associated with a consistency reduction factor of the first regression model that is responsible for a prediction failure of the first regression model.

In the modeling method, the simulation method, the manufacturing method and the semiconductor design system according to example embodiments, a consistency improvement process for updating the first regression model may be implemented by actively obtaining samples associated with regions where a prediction has failed, and thus factors that cause a reduction in the consistency of the first regression model may be handled or managed. For example, the first regression model may be re-trained based on the second sample data corresponding to the prediction failure by the first regression model. Accordingly, only the regions where the prediction has failed may be selectively trained, time required for the data collection operation may be saved, and the consistency of the first regression model may be improved or enhanced, thereby achieving the efficiency of the training operation. In addition, the consistency of the first regression model may be improved or enhanced by the automation of the consistency improvement process without an engineer's intervention, thereby achieving the automation of the training operation.

The consistency of a regression model may represent the performance (e.g. the accuracy) of the regression model. The consistency may have an inverse relationship to an error of the regression model. For instance, where the regression model is configured (e.g. trained) to output data that matches (e.g. within a given distance or similarity threshold) another data distribution (e.g. the first simulation data), the consistency of the regression model may represent a goodness of fit, an accuracy, a similarity or a distance of the output data from the other data distribution. For instance, the consistency may be determined by determining a coefficient of determination (an $R^2$-score) between the predictions output from the regression model and the other data distribution (e.g. the first simulation data).

At least some of the above and other features of the invention are set out in the claims.

## BRIEF DESCRIPTION OF THE DRAWINGS

Illustrative, non-limiting example embodiments will be more clearly understood from the following detailed description taken in conjunction with the accompanying drawings.

FIG. 1 is a flowchart illustrating a modeling method of a neural network according to example embodiments.
FIG. 2 is a flowchart illustrating an example of a modeling method of a neural network of FIG. 1.
FIGS. 3 and 4 are block diagrams illustrating a semiconductor design system for a semiconductor device according to example embodiments.
FIGS. 5A, 5B and 5C are diagrams illustrating examples of a neural network model that is used during a training operation in a modeling method of a neural network according to example embodiments.
FIG. 6 is a flowchart illustrating an example of a modeling method of a neural network of FIG. 1.
FIG. 7 is a flowchart illustrating an example of checking a consistency of a first regression model in FIG. 6.
FIG. 8 is a flowchart illustrating an example of generating additional sample data in FIG. 6.
FIG. 9 is a flowchart illustrating an example of selecting second sample data in FIG. 8.
FIGS. 10A, 10B, 10C, 10D, 10E and 10F are diagrams for describing operations of FIGS. 8 and 9.
FIG. 11 is a flowchart illustrating an example of generating additional sample data in FIG. 6.
FIG. 12 is a flowchart illustrating an example of selecting second sample data in FIG. 11.
FIGS. 13A, 13B, 13C, 13D, 14A, 14B, 14C, 14D, 14E, 14F, 14G and 14H are diagrams for describing operations of FIGS. 11 and 12.
FIG. 15 is a flowchart illustrating a simulation method according to example embodiments.
FIG. 16 is a flowchart illustrating an example of performing an inference operation in FIG. 15.
FIG. 17 is a flowchart illustrating a manufacturing method of a semiconductor device according to example embodiments.

## DETAILED DESCRIPTION OF EXAMPLE EMBODIMENTS

Various example embodiments will be described more fully with reference to the accompanying drawings, in which example embodiments are shown. The present disclosure may, however, be embodied in many different forms and should not be construed as limited to example embodiments set forth herein. Like reference numerals refer to like elements throughout this application.

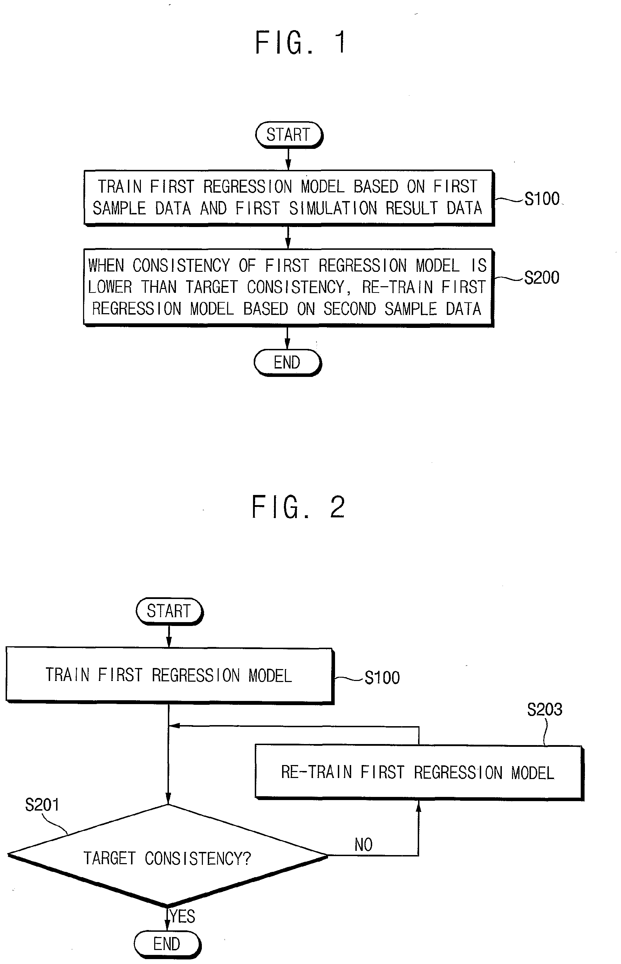

FIG. 1 is a flowchart illustrating a modeling method of a neural network according to example embodiments.

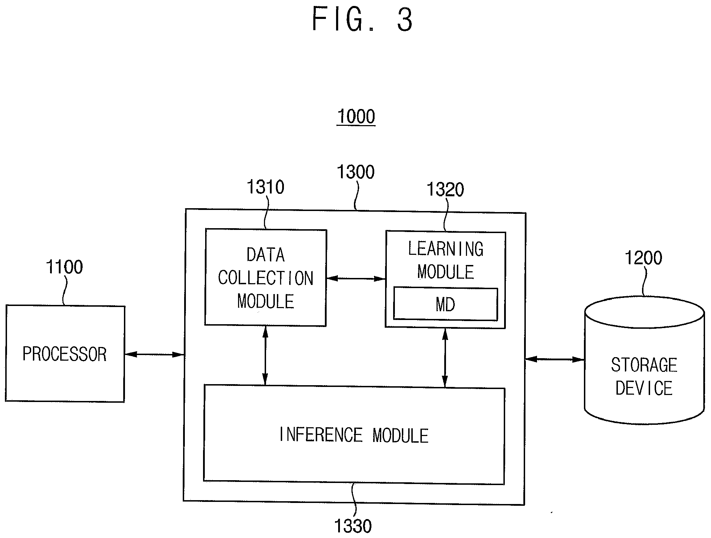

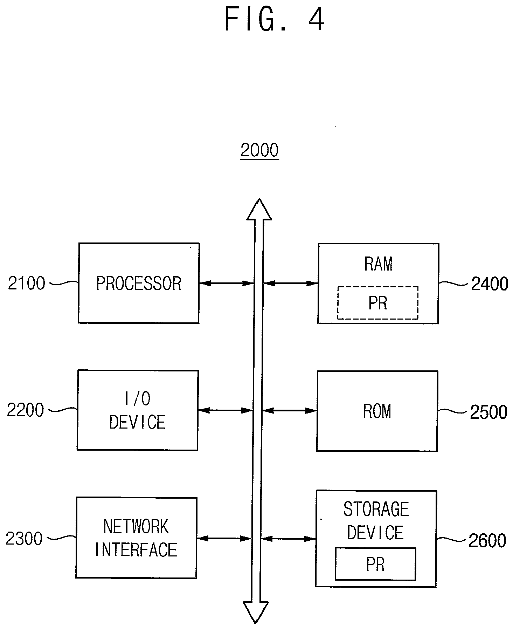

Referring to FIG. 1, a modeling method of a neural network according to example embodiments may be performed in a semiconductor design process or during a design process of a semiconductor device (or semiconductor integrated circuit). For example, the modeling method according to example embodiments may be performed to model a neural network used for a simulation in the semiconductor design process, and may be performed in a system and/or a tool for designing the semiconductor device. For example, a target of the simulation may be at least one of conditions of a manufacturing process of the semiconductor device and characteristics of the semiconductor device. For example, the system and/or the tool for designing the semiconductor device may include a program (or program code) that includes a plurality of instructions executed by at least one processor. The system and/or the tool will be described with reference to FIGS. 3 and 4.

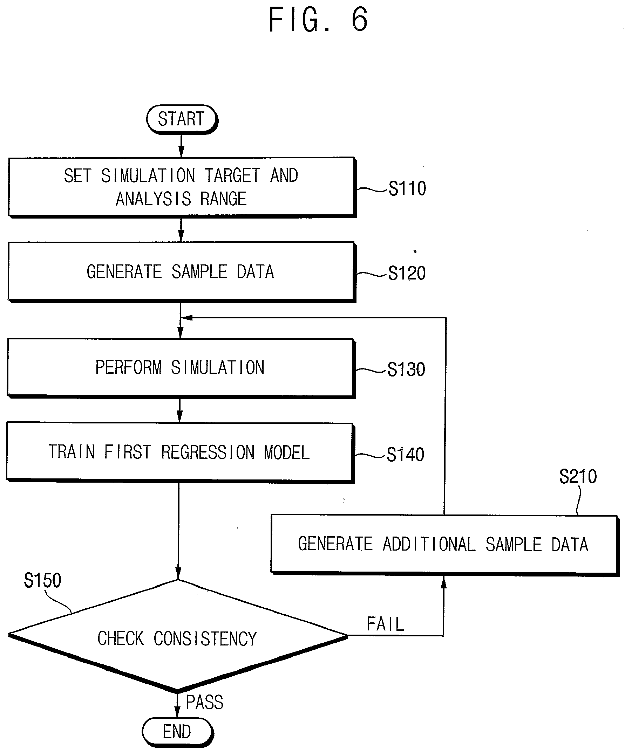

In the modeling method according to example embodiments, a first regression model is trained or learned based on first sample data and first simulation result data (operation S100). The first regression model is used to predict the first simulation result data from the first sample data. That is, the first regression model is trained to output data that matches the first simulation data (e.g. has a similar distribution to the distribution of the first simulation data) when the first sample data is input. The first regression model may be trained adjusting (e.g. optimizing) parameters of the first regression model to minimize an error from an error function (or to maximize an output from an objective function, such as maximizing a consistency of the first regression model). The first sample data represents at least one of the conditions of the manufacturing process of the semiconductor device and the characteristics of the semiconductor device, which are the target of the simulation. The first simulation result data may be obtained by performing a simulation on the first sample data. For example, the first sample data may include a plurality of sample data, and the first simulation result data may include a plurality of simulation result data. The first regression model may be referred to as an artificial intelligence (AI) model, a surrogate model, a machine learning model, a neural network model, or the like. Operation S 100 will be described with reference to FIG. 6.

In some example embodiments, the simulation on the first sample data may be performed based on a technology computer aided design (TCAD). TCAD simulation is a technique that reproduces a three-dimensional (3D) structure of a semiconductor device (e.g. a transistor) by simulating a semiconductor process or the semiconductor device, and that predicts the performance and defect rate of semiconductor devices in a layout design stage to reduce development time and cost.

When a consistency of the first regression model does not reach a target consistency, e.g., when the consistency of the first regression model is lower than the target consistency, the first regression model is re-trained or re-learned based on second sample data different from the first sample data (operation S200). At least a minimum amount of training iterations (or updates) may be performed in operation S 100 before the consistency is assessed in operation S200. The second sample data is associated with or related to a consistency reduction factor of the first regression model that is responsible for or causes a prediction failure of the first regression model. Operation S200 will be described with reference to FIG. 6.

The consistency of the first regression model may represent the performance of the first regression model. For instance, the consistency may represent how well predictions output from the first regression model match the first simulation data (e.g. how well a distribution of output data from the first regression model matches a distribution of the first simulation data).

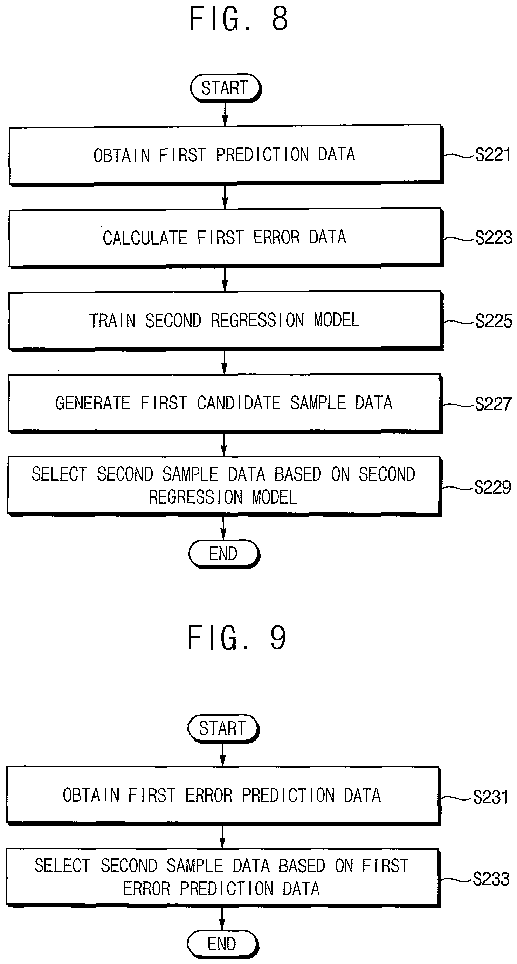

In some example embodiments, a reduction or decrease in the consistency of the first regression model may be caused by a discontinuity of the first simulation result data. In this example, the second sample data may be obtained by performing an active sampling. The active sampling may be performed using a second regression model different from the first regression model. The second regression model may be used to predict first error data representing errors between the first simulation result data and first prediction data, and the first prediction data may be obtained based on the first regression model and the first sample data. The active sampling will be described with reference to FIG. 8.

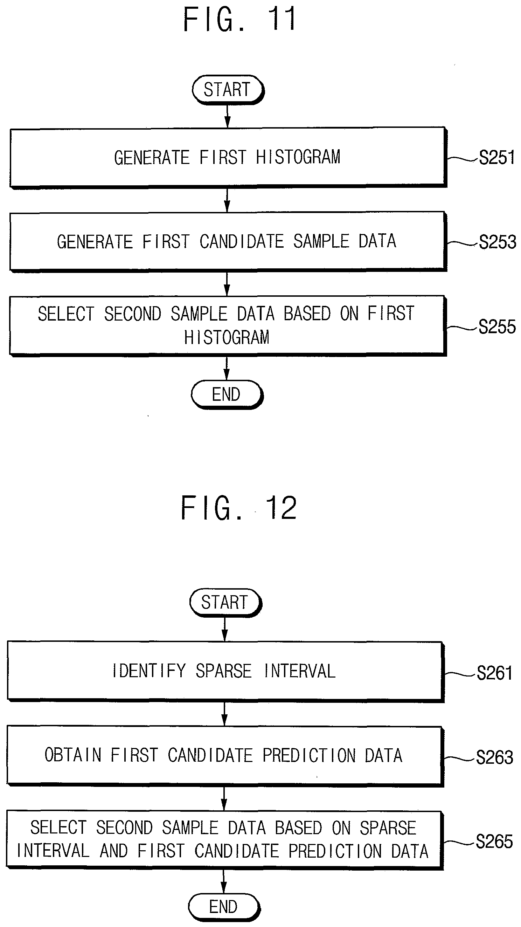

In other example embodiments, a reduction or decrease in the consistency of the first regression model may be caused by a non-uniformity of the first simulation result data. In this example, the second sample data may be obtained by performing a balanced sampling. The balanced sampling may be performed using a sparse interval in a first histogram of the first simulation result data. The sparse interval may represent an interval in which the number of simulation result data is less than a reference number. The balanced sampling will be described with reference to FIG. 11.

In still other example embodiments, the second sample data may be obtained by performing both the active sampling and the balanced sampling.

Although FIG. 1 illustrates that the operation of re-training the first regression model (e.g., operation S200) is performed once, example embodiments are not limited thereto. As will be described with reference to FIG. 2, the operation of re-training the first regression model may be performed multiple times.

FIG. 2 is a flowchart illustrating an example of a modeling method of a neural network of FIG. 1.

Referring to FIGS. 1 and 2, in the modeling method according to example embodiments, operation S100 in FIG. 2 may be the same or substantially the same as operation S 100 in FIG. 1.

When re-training the first regression model (operation S200), it may be checked or determined whether the consistency of the first regression model becomes higher than or equal to the target consistency (operation S201).

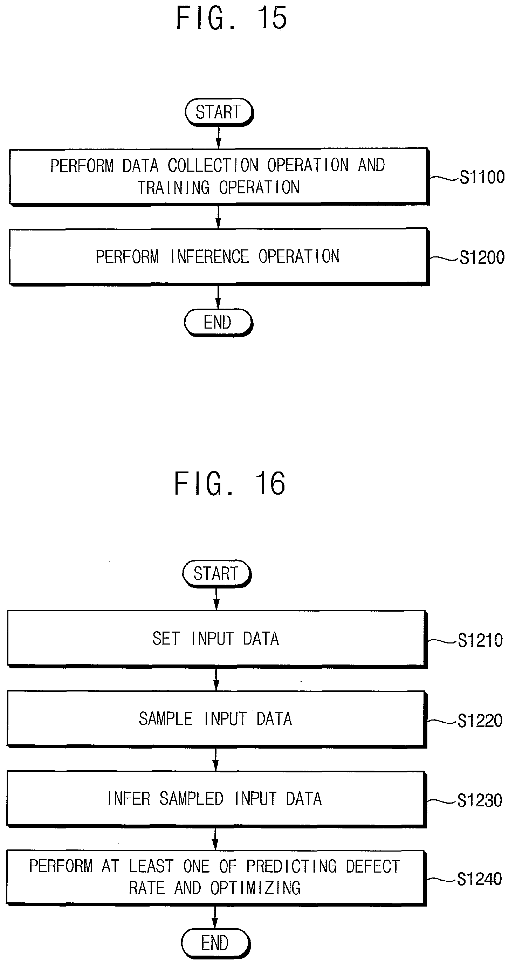

When the consistency of the first regression model does not reach the target consistency (operation S201: NO), e.g., when a current consistency value representing the consistency of the first regression model is smaller than a target consistency value representing the target consistency, the first regression model may be re-trained based on the second sample data (operation S203). When the consistency of the first regression model reaches the target consistency (operation S201: YES), e.g., when the current consistency value is greater than or equal to the target consistency value, the process may terminated without re-training the first regression model. In other words, the operation of re-training the first regression model may be repeatedly performed until the consistency of the first regression model becomes greater than or equal to the target consistency. At this point, the first regression model may be output, and/or may be utilized in inference (e.g. step S1200 of FIG. 15).

Recently, as higher integration and/or miniaturization of semiconductors have progressed, an influence of process variation or distribution on defects or failures has increased. To reflect the process variation in a simulation, a massive amount of simulations corresponding to the number of target patterns (e.g., a pattern count) existing on a semiconductor device or chip may be required. However, considering the number of hundreds to billions of pattern counts and the simulation time of about several minutes to several hours per simulation, such analysis may be very difficult.

The above-described limitations may be overcome using an AI model or a surrogate model that simulates simulation results, and the process may be performed as follows: 1) data collection operation - simulation results may be collected for thousands of random process conditions within a scope of a design of experiment (DOE); 2) training or learning operation - an AI model that simulates the collected simulation results may be trained; and 3) inference operation - conditions associated with an occurrence of defects may be analyzed by applying the trained AI model to the DOE reflecting the process variation. For example, operations S100 and S200 described with reference to FIG. 1 may correspond to the data collection operation and the training operation, and operation S1200, which will be described with reference to FIG. 15, may correspond to the inference operation.

To accurately analyze the process variation in the inference operation, it may be advantageous to obtain the AI model with higher consistency. However, it may be difficult to obtain the AI model with higher consistency because a very large amount of samples should be collected in the data collection operation and an intervention of a skilled AI engineer is required. In addition, factors that cause a reduction in the consistency of the AI model that simulates the simulation results may be discontinuity and non-uniformity of the simulation results.

In the modeling method of the neural network according to example embodiments, a consistency improvement process for updating an AI model (e.g., the first regression model) may be implemented by actively obtaining samples associated with regions where a prediction has failed, and thus factors that cause a reduction in the consistency of the AI model may be handled or managed. For example, the first regression model may be re-trained based on the second sample data corresponding to the prediction failure by the first regression model. Accordingly, only the regions where the prediction has failed may be selectively trained, time required for the data collection operation may be saved, and the consistency of the first regression model may be improved or enhanced, thereby achieving the efficiency of the training operation. In addition, the consistency of the first regression model may be improved or enhanced by the automation of the consistency improvement process without an engineer's intervention, thereby achieving the automation of the training operation.

FIGS. 3 and 4 are block diagrams illustrating a semiconductor design system for a semiconductor device according to example embodiments.

Referring to FIG. 3, a semiconductor design system 1000 for a semiconductor device includes a processor 1100, a storage device 1200 and/or a neural network modeling and simulation module 1300.

Herein, the term "module" may indicate, but is not limited to, a software and/or hardware component, such as a field programmable gate array (FPGA) or an application specific integrated circuit (ASIC), which performs certain tasks. A module may be configured to reside in a tangible addressable storage medium and be configured to execute on one or more processors. For example, a "module" may include components such as software components, object-oriented software components, class components and task components, and processes, functions, Routines, segments of program code, drivers, firmware, microcode, circuitry, data, databases, data structures, tables, arrays, and variables. A "module" may be divided into a plurality of "modules" that perform detailed functions.

The processor 1100 may be used when the neural network modeling and simulation module 1300 performs computations or calculations. For example, the processor 1100 may include a microprocessor, an application processor (AP), a central processing unit (CPU), a digital signal processor (DSP), a graphic processing unit (GPU), a neural processing unit (NPU), or the like. Although FIG. 3 illustrates that the design system 1000 includes one processor 1100, example embodiments are not limited thereto. For example, the semiconductor design system 1000 may include a plurality of processors. In addition, the processor 1100 may include cache memories to increase computation capacity.

The storage device 1200 may store data used for operations of the processor 1100 and the neural network modeling and simulation module 1300. In some example embodiments, the storage device (or storage medium) 1200 may include any computer-readable storage medium used to provide commands and/or data to a computer. The computer-readable storage medium may be transitory or non-transitory. For example, the computer-readable storage medium may include a volatile memory such as a static random access memory (SRAM), a dynamic random access memory (DRAM), or the like, and a nonvolatile memory such as a flash memory, a magnetic random access memory (MRAM), a phase-change random access memory (PRAM), a resistive random access memory (RRAM), or the like. The computer-readable storage medium may be inserted into the computer, may be integrated in the computer, or may be coupled to the computer through a communication medium such as a network and/or a wireless link.

The neural network modeling and simulation module 1300 may perform the modeling method of the neural network according to example embodiments described with reference to FIG. 1, and may perform a simulation method according to example embodiments which will be described with reference to FIG. 15. The neural network modeling and simulation module 1300 may include a data collection module 1310, a learning (or training) module 1320 and an inference module 1330.

The data collection module 1310 may perform a data collection operation for performing the modeling method and/or the simulation method according to example embodiments. For example, the data collection module 1310 may collect sample data, and may collect and/or generate various other data.

The learning module 1320 may perform a training operation (or a re-training operation) for performing the modeling method and/or the simulation method according to example embodiments. For example, the learning module 1320 may perform various operations, processing, data generating and storing, etc. for training an AI model MD (e.g., the first regression model and/or the second regression model).

The inference module 1330 may perform an inference operation for performing the modeling method and/or the simulation method according to example embodiments. For example, the inference module 1330 may perform at least one of predicting a defect rate and optimizing based on the AI model MD that has been trained and generated and by reflecting the process variation and conditions.

The data collection module 1310 and the learning module 1320 may perform operations S100 and S200 described with reference to FIG. 1, and the inference module 1330 may perform operation S1200 which will be described with reference to FIG. 15.

In some example embodiments, the AI model MD, the data collection module 1310, the learning module 1320 and the inference module 1330 may be implemented as instructions or program code that may be executed by the processor 1100. For example, the instructions or program code of the AI model MD, the data collection module 1310, the learning module 1320 and the inference module 1330 may be stored in computer readable medium. For example, the processor 1100 may load the instructions or program code to a working memory (e.g., a DRAM, etc.).

In other example embodiments, the processor 1100 may be manufactured to efficiently execute instructions or program code included in the AI model MD, the data collection module 1310, the learning module 1320 and the inference module 1330. For example, the processor 1100 may efficiently execute the instructions or program code from various AI modules and/or machine learning modules. For example, the processor 1100 may receive information corresponding to the AI model MD, the data collection module 1310, the learning module 1320 and the inference module 1330 to operate the AI model MD, the data collection module 1310, the learning module 1320 and the inference module 1330.

In some example embodiments, the data collection module 1310, the learning module 1320 and the inference module 1330 may be implemented as a single integrated module. In other example embodiments, the data collection module 1310, the learning module 1320 and the inference module 1330 may be implemented as separate and different modules.

Referring to FIG. 4, a semiconductor design system 2000 for a semiconductor device includes a processor 2100, an input/output (I/O) device 2200, a network interface 2300, a random access memory (RAM) 2400, a read only memory (ROM) 2500 and/or a storage device 2600. FIG. 4 illustrates an example where all of the data collection module 1310, the learning module 1320 and the inference module 1330 in FIG. 3 are implemented in software.

The semiconductor design system 2000 may be a computing system. For example, the computing system may be a fixed computing system such as a desktop computer, a workstation or a server, or may be a portable computing system such as a laptop computer.

The processor 2100 may be the same or substantially the same as the processor 1100 in FIG. 3. For example, the processor 2100 may include a core or a processor core for executing an arbitrary instruction set (for example, intel architecture-32 (IA-32), 64 bit extension IA-32, x86-64, PowerPC, Sparc, MIPS, ARM, IA-64, etc.). For example, the processor 2100 may access a memory (e.g., the RAM 2400 or the ROM 2500) through a bus, and may execute instructions stored in the RAM 2400 or the ROM 2500. As illustrated in FIG. 4, the RAM 2400 may store a program PR corresponding to the data collection module 1310, the learning module 1320 and/or the inference module 1330 in FIG. 3 or at least some elements of the program PR, and the program PR may allow the processor 2100 to perform operations for the neural network modeling and/or the simulation in the semiconductor design process (e.g., operations S100 and S200 in FIG. 1 and/or operations S 1100 and S1200 in FIG. 15).

In other words, the program PR may include a plurality of instructions and/or procedures executable by the processor 2100, and the plurality of instructions and/or procedures included in the program PR may allow the processor 2100 to perform the operations for the neural network modeling and/or the simulation in the semiconductor design process according to example embodiments. Each of the procedures may denote a series of instructions for performing a certain task. A procedure may be referred to as a function, a routine, a subroutine, or a subprogram. Each of the procedures may process data provided from the outside and/or data generated by another procedure.

In some example embodiments, the RAM 2400 may include any volatile memory such as an SRAM, a DRAM, or the like.

The storage device 2600 may be the same or substantially the same as the storage device 1200 in FIG. 3. For example, the storage device 2600 may store the program PR. The program PR or at least some elements of the program PR may be loaded from the storage device 2600 to the RAM 2400 before being executed by the processor 2100. The storage device 2600 may store a file written in a program language, and the program PR generated by a compiler or the like or at least some elements of the program PR may be loaded to the RAM 2400.

The storage device 2600 may store data, which is to be processed by the processor 2100, or data obtained through processing by the processor 2100. The processor 2100 may process the data stored in the storage device 2600 to generate new data, based on the program PR and may store the generated data in the storage device 2600.

The I/O device 2200 may include an input device, such as a keyboard, a pointing device, or the like, and may include an output device such as a display device, a printer, or the like. For example, a user may trigger, through the I/O devices 2200, execution of the program PR by the processor 2100, and may provide or check various inputs, outputs and/or data, etc.

The network interface 2300 may provide access to a network outside the semiconductor design system 2000. For example, the network may include a plurality of computing systems and communication links, and the communication links may include wired links, optical links, wireless links, or arbitrary other type links. Various inputs may be provided to the semiconductor design system 2000 through the network interface 2300, and various outputs may be provided to another computing system through the network interface 2300.

In some example embodiments, the computer program code, the AI model MD, the data collection module 1310, the learning module 1320 and/or the inference module 1330 may be stored in a transitory or non-transitory computer readable medium. In some example embodiments, values resulting from a simulation performed by the processor or values obtained from arithmetic processing performed by the processor may be stored in a transitory or non-transitory computer readable medium. In some example embodiments, intermediate values generated during the training operation may be stored in a transitory or non-transitory computer readable medium. In some example embodiments, various data such as sample data, simulation result data, device data, prediction data, error data, error prediction data and histogram data may be stored in a transitory or non-transitory computer readable medium. However, example embodiments are not limited thereto.

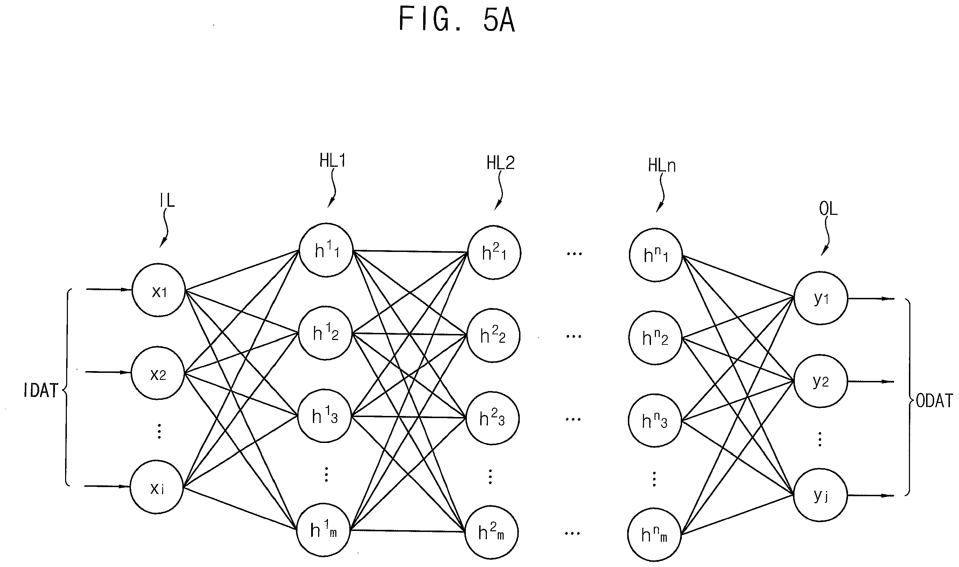

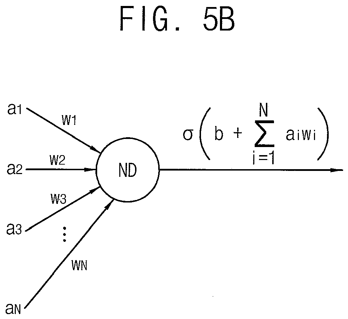

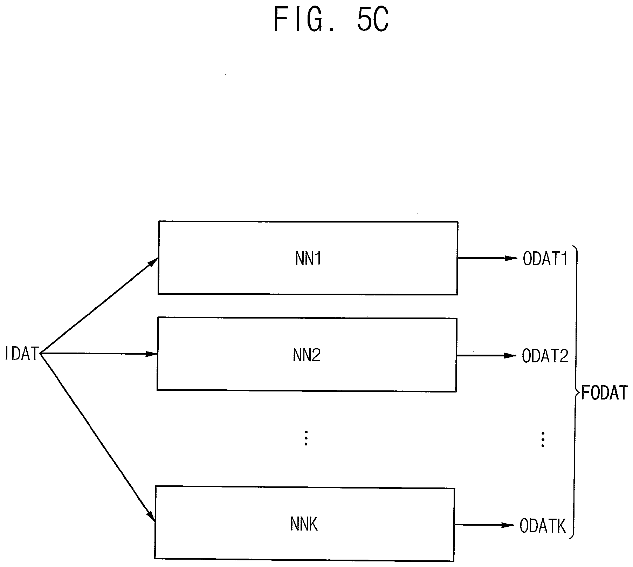

FIGS. 5A, 5B and 5C are diagrams illustrating examples of a neural network model that is used during a training operation in a modeling method of a neural network according to example embodiments.

Referring to FIG. 5A, a general neural network (or artificial neural network) may include an input layer IL, a plurality of hidden layers HL1, HL2, ..., HLn and an output layer OL.

The input layer IL may include i input nodes $x_1$, $x_2$, ..., $x_i$, where i is a natural number. Input data (e.g., vector input data) IDAT whose length is i may be input to the input nodes $x_1$, $x_2$, ..., $x_i$ such that each element of the input data IDAT is input to a respective one of the input nodes $x_1$, $x_2$, ..., $x_i$.

The plurality of hidden layers HL1, HL2, ..., HLn may include n hidden layers, where n is a natural number, and may include a plurality of hidden nodes $h^1{}_1$, $h^1{}_2$, $h^1{}_3$, ..., $h^1{}_m$, $h^2{}_1$, $h^2{}_2$, $h^2{}_3$, ..., $h^2{}_m$, $h^n{}_1$, $h^n{}_2$, $h^n{}_3$, ..., $h^n{}_m$. For example, the hidden layer HL1 may include m hidden nodes $h^1{}_1$, $h^1{}_2$, $h^1{}_3$, ..., $h^1{}_m$, the hidden layer HL2 may include m hidden nodes $h^2{}_1$, $h^2{}_2$, $h^2{}_3$, ..., $h^2{}_m$, and the hidden layer HLn may include m hidden nodes $h^n{}_1$, $h^n{}_2$, $h^n{}_3$, ..., $h^n{}_m$, where m is a natural number. Having said this, each hidden layer need not have the same number of nodes (each layer may have any number of nodes).

The output layer OL may include j output nodes $y_1$, $y_2$, ..., $y_j$, where j is a natural number. The output layer OL may generate output values (e.g., numerical output such as a regression variable) and/or output data ODAT associated with the input data IDAT. In some example embodiments, the output layer OL may be a fully-connected layer and may indicate, for example, output values when the input data IDAT is applied to the TCAD simulation.

A structure of the neural network illustrated in FIG. 5A may be represented by information on branches (or connections) between nodes illustrated as lines, and a weighted value assigned to each branch, which is not illustrated. In some neural network models, nodes within one layer may not be connected to one another, but nodes of different layers may be fully or partially connected to one another. In some other neural network models, such as unrestricted Boltzmann machines, at least some nodes within one layer may also be connected to other nodes within one layer in addition to (or alternatively with) one or more nodes of other layers.

Each node in the input layer IL (e.g. xi)_may receive an input, may perform a computing operation computation or calculation on the received input, and may output a result of the computing operation, computation or calculation as an output to a next node (e.g., the node $h^1{}_1$). Each node in the hidden layers (e.g., the node $h^1{}_1$) may receive an output of a previous node (e.g., the node $x_1$), may perform a computing operation, computation or calculation on the received output, and may output a result of the computing operation, computation or calculation as an output to a next node (e.g., the node $h^2{}_1$). Each node in the output layer (e.g., the node yi) may receive an output of a previous node (e.g., the node $h^n{}_1$), may perform a computing operation, computation or calculation on the received output, and may output a result of the computing operation, computation or calculation as an output. Each node may calculate a value to be output by applying the input to a specific function, e.g., a nonlinear function.

In some example embodiments, the structure of the neural network may be set in advance, and the weighted values for the connections between the nodes may be set appropriately by using sample data having sample answer, which indicates result data corresponding to a sample input value. The data with the sample answer may be referred to as "training data", and a process of determining the weighted value may be referred to as "training". The neural network "learns" to associate the data with corresponding labels during the training process. A group of an independently trainable structure and the weighted value may be referred to as a "model", and a process of predicting, by the model with the determined weighted value, which class input data belongs to, and then outputting the predicted value, may be referred to as a "testing" process.

Referring to FIG. 5B, an example of an operation (e.g., computation or calculation) performed by one node ND included in the neural network of FIG. 5A is illustrated in detail.

Based on N inputs $a_1$, $a_2$, $a_3$, ..., $a_N$ provided to the node ND, where N is a natural number greater than or equal to two, the node ND may multiply the N inputs $a_1$ to $a_N$ and corresponding N weights $w_1$, $w_2$, $w_3$, ..., $w_N$, respectively, may sum N values obtained by the multiplication, may add an offset "b" to a summed value, and may generate one output value (e.g., "z") by applying a value to which the offset "b" is added to a specific function "σ". That is, the operation of the node may be

$$z = b + \sum_{i=1}^{N} a_i w_i .$$

In some example embodiments and as illustrated in FIG. 5B, one layer included in the neural network illustrated in FIG. 5A may include M nodes ND, where M is a natural number greater than or equal to two, and output values of the one layer may be obtained by Equation 1.

[Equation 1]

$$W*A=Z$$

In Equation 1, "W" denotes a weight set including weights for all connections included in the one layer, and may be implemented in an M*N matrix form. "A" denotes an input set including the N inputs $a_1$ to $a_N$ received by the one layer, and may be implemented in an N*1 matrix form. "Z" denotes an output set including M outputs $z_1$, $z_2$, $z_3$, ..., $z_M$ output from the one layer, and may be implemented in an M* 1 matrix form.

Referring to FIG. 5C, an ensemble neural network may include a plurality of general neural networks NN1, NN2, ..., NNK, where K is a natural number greater than or equal to two.

Each of the plurality of general neural networks NN1 to NNK may have a structure described with reference to FIG. 5A, and may include, for example, P fully-connected layers, where P is a natural number greater than or equal to two. The general neural networks NN1 to NNK may have any number of layers greater than or equal to two, and need not have the same number of layers.

The plurality of general neural networks NN1 to NNK may output a plurality of output data ODAT1, ODAT2, ..., ODATK corresponding to the input data IDAT. An average value of the plurality of output data ODAT1 to ODATK may be output as final output data FODAT of the ensemble neural network.

In some example embodiments, in the modeling method according to example embodiments, the training of the first regression model may be performed based on the ensemble neural network. For example, the training of the first regression model may be performed based on an ensemble neural network that includes ten general neural networks each of which includes three fully-connected layers with 256 nodes.

However, example embodiments may not be limited thereto, and may be applied or employed to various other neural networks such as generative adversarial networks (GANs), region with convolutional neural networks (R-CNNs), region proposal networks (RPNs), recurrent neural networks (RNNs), stacking-based deep neural networks (S-DNNs), state-space dynamic neural networks (S-SDNNs), deconvolution networks, deep belief networks (DBNs), restricted Boltzman machines (RBMs), fully convolutional networks, and/or long short-term memory (LSTM) networks. Alternatively or additionally, the neural network may include other forms of machine learning models, such as, for example, linear and/or logistic regression, statistical clustering, Bayesian classification, decision trees, dimensionality reduction such as principal component analysis, and expert systems; and/or combinations thereof, including ensembles such as random forests.

FIG. 6 is a flowchart illustrating an example of a modeling method of a neural network of FIG. 1.

Referring to FIGS. 1 and 6, in the modeling method according to example embodiments, when training the first regression model (operation S100), a simulation target to be simulated and an analysis range for the simulation target may be set (operation S110). The simulation target may be referred to as a simulation deck. For example, the analysis range may include at least one of a range of the conditions of the manufacturing process of the semiconductor device and a range of the characteristics of the semiconductor device.

Sample data may be randomly generated within the analysis range (operation S120). The sample data may represent one or more of conditions of the manufacturing process of the semiconductor device and characteristics of the semiconductor device. The sample data generated in operation S120 may correspond to the first sample data in operation S100 of FIG. 1. The first sample data may be referred to as initial sample data. For example, the number of the first sample data may be N, where N is a natural number greater than or equal to two, and a set of the first sample data may be denoted by "X".

In some example embodiments, Operation S120 may be performed based on a Sobol algorithm. The Sobol algorithm is an algorithm in which samples are obtained from each subspace while a coordinate space is dividing into subspaces having the same volume, and thus samples are uniformly obtained from the entire coordinate space. However, example embodiments are not limited thereto.

Simulation result data may be obtained by performing a simulation on the sample data generated in operation S120 (operation S130). When the sample data generated in operation S120 correspond to the first sample data, the simulation result data obtained based on the first sample data in operation S130 may correspond to the first simulation result data in operation S100 of FIG. 1. The first simulation result data that are collected as a result of the simulation on the first sample data "X" may be denoted by "y".

Based on the sample data (e.g., the first sample data) generated in operation S120 and the simulation result data (e.g., the first simulation result data) obtained in operation S130, the first regression model may be trained (operation S140). For example, the first regression model may be trained using the ensemble neural network described with reference to FIG. 5C. The first regression model may be denoted by "f".

The consistency of the first regression model trained in operation S140 may be checked (operation S150). The consistency may represent how well outputs of the first regression model represent the simulation result data. For example, the consistency of the first regression model may be checked using an $R^2$-score between predicted values of the first sample data in the first regression model and the first simulation result data. The $R^2$-score (otherwise known as a coefficient of determination) may represent the similarity (e.g. the goodness of fit) between the predicted values and the first simulation result data. The predicted values of the first sample data in the first regression model may be denoted by "f(X)". The consistency of the first regression model checked in operation S150 may be referred to as a prediction consistency, a current consistency, or the like. The consistency may be a representation of the performance of the first regression model (e.g. how well the first regression model produces predictions that match the first simulation result data). As the consistency of the first regression model increases, the error of the first regression model may decrease.

When it is determined that the consistency of the first regression model reaches the target consistency based on a result of checking the consistency of the first regression model (operation S150: PASS), the process may be terminated without re-training the first regression model.

When re-training the first regression model (operation S200), when the consistency of the first regression model does not reach the target consistency based on the result of checking the consistency of the first regression model (operation S150: FAIL), additional sample data may be generated to intensively train regions where the first regression model fails to predict (operation S210). The additional sample data generated when operation S210 is performed a first time may correspond to the second sample data in operation S200 of FIG. 1.

In some example embodiments, when operation S210 is performed, at least one of active sampling and balanced sampling may be performed, which will be described with reference to FIGS. 8 and 11.

Additional simulation result data may be obtained by performing a simulation on the additional sample data generated in operation S210 (operation S130). The additional sample data generated when operation S210 is performed for the first time may correspond to the second sample data, the simulation result data obtained based on the second sample data in operation S130 may be referred to as second simulation result data to be distinguished from the first simulation result data.

Based on the sample data (e.g., the first sample data) generated in operation S120, the additional sample data (e.g., the second sample data) generated in operation S210, and the simulation result data (e.g., the first and second simulation result data) obtained in operation S130, the first regression model may be re-trained such that the first and second simulation result data are predicted from the first and second sample data (operation S140). Thereafter, the consistency of the first regression model re-trained in operation S140 may be checked again (operation S150).

As described above, operations S110 and S120 and operations S130, S140 and S150 that are performed a first time may correspond to operation S100 in FIG. 1, and operation S210 and operations S130, S140 and S150 that are performed a second time may correspond to operation S200 in FIG. 1.

As described with reference to FIG. 2, the operation of re-training the first regression model may be repeatedly performed until the consistency of the first regression model reaches the target consistency, and thus operations S210, S130, S140 and S150 may be repeatedly performed. For example, when the consistency of the first regression model is checked again, but the consistency of the first regression model still does not reach the target consistency (operation S150: FAIL), additional sample data may be generated by performing operation S210 again, and the additional sample data generated by performing operation S210 a second time may be referred to as third sample data to be distinguished from the second sample data. Thereafter, third simulation result data distinguished from the first and second simulation result data may be obtained by performing a simulation on the third sample data generated by performing operation S210 a second time (operation S130), the first regression model may be re-trained based on the first, second and third sample data and the first, second and third simulation result data (operation S140), and the consistency of the first regression model may be checked again (operation S150).

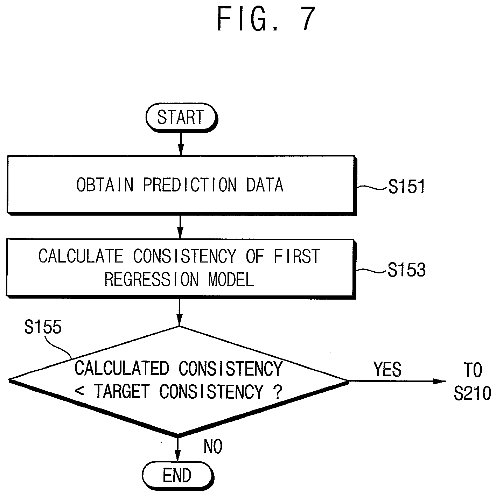

FIG. 7 is a flowchart illustrating an example of checking a consistency of a first regression model in FIG. 6.

Referring to FIGS. 6 and 7, when checking the consistency of the first regression model (operation S150), first prediction data may be obtained based on the first regression model and the first sample data (operation S151), the consistency of the first regression model may be calculated based on the first prediction data and the first simulation result data (operation S153), and the consistency (e.g., the current consistency value) of the first regression model may be compared with the target consistency (e.g., the target consistency value) (operation S155). As described with reference to FIG. 6, the first prediction data may be denoted by "f(X)".

When the consistency of the first regression model calculated in operation S153 is lower than the target consistency (operation S155: YES), operation S210 may be performed. When the consistency of the first regression model calculated in operation S153 becomes greater than or equal to the target consistency (operation S155: NO), the process may be terminated without re-training the first regression model.

FIG. 8 is a flowchart illustrating an example of generating additional sample data in FIG. 6.

Referring to FIGS. 6 and 8, an example where the additional sample data are generated by performing the active sampling and the second sample data are generated as the additional sample data by performing operation S210 a first time is illustrated. When the reduction in the consistency of the first regression model is caused by the discontinuity of the first simulation result data, the active sampling may be performed.

When generating the additional sample data (operation S210), the first prediction data may be obtained based on the first regression model and the first sample data (operation S221). Operation S221 may be the same or substantially the same as operation S151 in FIG. 7. When operation S151 has already been performed, operation S221 may be omitted.

First error data may be calculated (operation S223). The first error data may represent errors between the first simulation result data and the first predicted data. The first error data may be denoted by "e", and e=|y - $f$(X)|.

A second regression model may be trained (operation S225). The second regression model may be used to predict the first error data from the first sample data. That is, the second regression model may be trained to output predicted error data that has a distribution that matches a distribution of the first error data. This may be achieved by adjusting (e.g. optimizing) the parameters of the second regression model to reduce or minimize an error between the predicted error data and the first error data. For example, as with operation S140 in FIG. 6, the second regression model may be trained using the ensemble neural network described with reference to FIG. 5C. The second regression model may be denoted by "g".

In some example embodiments, the higher the value of "g(x)" increases (as the output of the second regression model increases), the lower the predictive ability of the first regression model "f' at or around "x". In other words, as the value of "g(x)" increases, there may be a higher probability to improve the consistency of the first regression model when "x" is included in a training set. Therefore, when samples having higher values of "g(x)" are collected as the second sample data, it may be more advantageous for improving the consistency of the first regression model.

To collect the samples having the higher values of "g(x)", a large or massive amount of first candidate sample data may be generated (operation S227). For example, the number of the first candidate sample data may be greater than the number of the first sample data. For example, when the number of the first sample data is N, the number of the first candidate sample data may be M, where M is a natural number greater than N. For example, M=N*20, but example embodiments are not limited thereto. For example, M may be designated and changed based on a user setting signal.

In some example embodiments, as with operation S 120 in FIG. 6, operation S227 may be performed based on the Sobol algorithm.

The second sample data may be selected from among the first candidate sample data based on the second regression model (operation S229). For example, the number of second sample data may be N, which is equal to the number of first sample data, but example embodiments are not limited thereto.

FIG. 9 is a flowchart illustrating an example of selecting second sample data in FIG. 8.

Referring to FIGS. 8 and 9, when selecting the second sample data (operation S229), first error prediction data may be obtained based on the second regression model and the first candidate sample data (operation S231). The second sample data may be selected from among the first candidate sample data based on the first error prediction data (operation S233). The first error prediction data may correspond to "g(x)" described with reference to FIG. 8.

In some example embodiments, the number of the first candidate sample data may be M, and the number of the first error prediction data obtained based on the first candidate sample data may also be M, where M is a natural number greater than or equal to two. Each of the M first error prediction data may correspond to a respective one of the M first candidate sample data. When the number of the second sample data is equal to the number of the first sample data, N first candidate sample data may be selected from among the M first candidate sample data as the second sample data, where N is a natural number less than M. As described above, it may be advantageous for improving the consistency of the first regression model when the samples having the higher values of "g(x)" are collected as the second sample data, and thus the N first candidate sample data selected as the second sample data may correspond to N first error prediction data having higher or larger values from among the M first error prediction data. N may be a predefined number, or may be a predefine proportion of M (e.g. X% of M, where X is less than 100).

Although the example where the second sample data are generated as the additional sample data is described with reference to FIGS. 8 and 9, example embodiments are not limited thereto. For example, when the third sample data are generated as the additional sample data by performing operation S210 a second time, the process may also be performed similarly to that described with reference to FIGS. 8 and 9. For example, second prediction data may be obtained based on the first regression model and the second sample data, second error data representing errors between the second simulation result data and the second prediction data may be calculated, the second regression model may be re-trained such that the first and second error data are predicted from the first and second sample data, second candidate sample data may be generated, and the third sample data may be selected from among the second candidate sample data based on the second regression model. In addition, second error prediction data may be obtained based on the second regression model and the second candidate sample data, and the third sample data may be selected from among the second candidate sample data based on the second error prediction data.

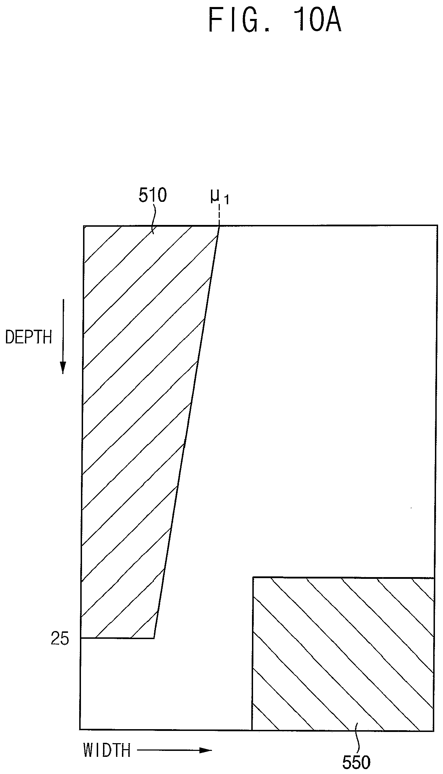

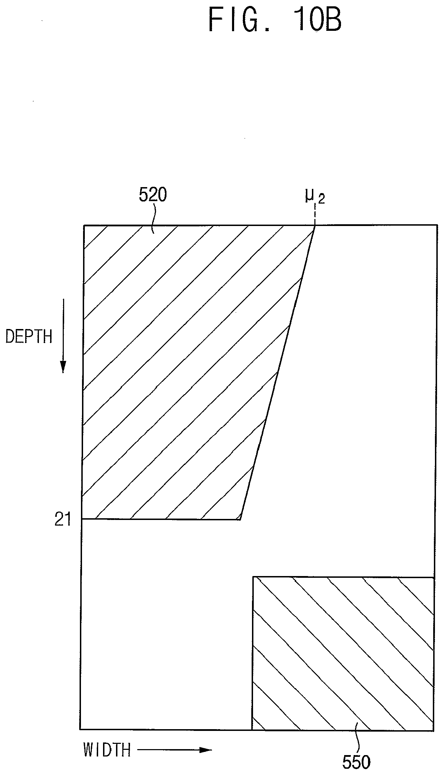

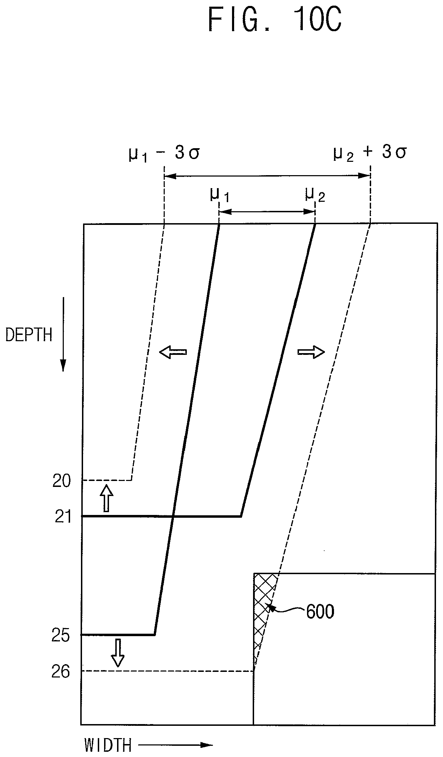

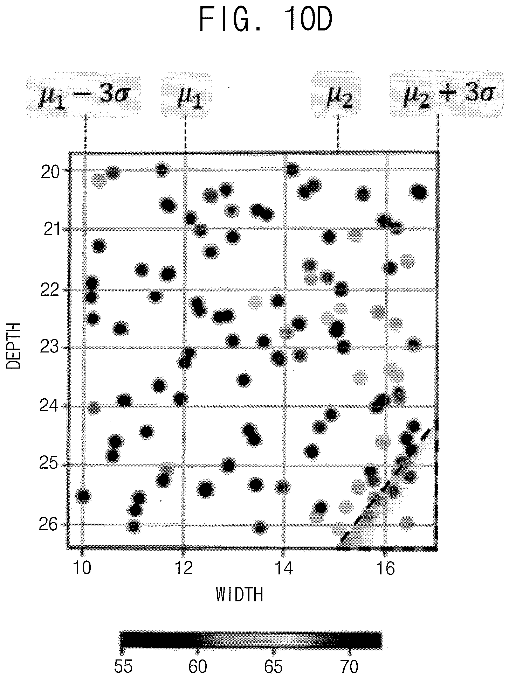

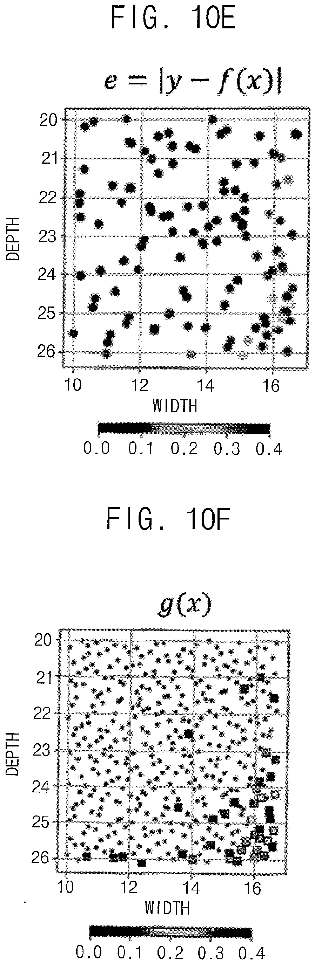

FIGS. 10A, 10B, 10C, 10D, 10E and 10F are diagrams for describing operations of FIGS. 8 and 9.

Referring to FIGS. 10A, 10B, 10C, 10D, 10E and 10F, the discontinuity, which is one of the major factors that cause the reduction in the consistency of the regression model, will be explained. In addition, a reason why the neural network-based regression model fails to predict in this situation and a method how to overcome such problem by performing the active sampling will be explained.

In the simulation analysis associated with defects due to process variation, the analysis range may be increased from the adjustable range (e.g., from $\mu_1$ to $\mu_2$) of process conditions to the extended range (e.g., from ($\mu_1$-3$\sigma$) to ($\mu_2$+3$\sigma$) when a standard deviation of the process variation is $\sigma$) due to the process variation. In this situation, the unpredictable discontinuous pattern change (hereinafter referred to as discontinuity) may occur due to excessive extension of the analysis range.

For example, when a first structure to be formed in a semiconductor substrate is designed, the performance simulation for the first structure according to changes in an etch depth and an etch width of the first structure may be performed. For example, a simulation may be performed to find an optimal width and an optimal depth of the first structure between a first example of FIG. 10A and a second example of FIG. 10B. As illustrated in FIG. 10A, a first structure 510 of the first example may have a first shape with a narrow width and a deep depth. As illustrated in FIG. 10B, a first structure 520 of the second example may have a second shape with a wide width and a shallow depth. In addition, a second structure 550 different from the first structure may be disposed in a lower right region of the semiconductor substrate.

For this optimization problem, when a range of the process conditions is set to a range from $\mu$1 to $\mu$2 and a standard deviation of the process variation is $\sigma$, a range to be analyzed for the first structure may be extended a range from ($\mu_1$-3$\sigma$) to ($\mu_2$+3$\sigma$), as illustrated in FIG. 10C. Thus, the first structure may be extended to have a relatively wide and deep structure up to a region illustrated by dotted lines in FIG. 10C, and then an unexpected and unusual situation, for example, an unusual region 600 contacting the second structure 550 adjacent to the first structure may occur.

When the unusual region 600 associated with the discontinuity occurs, the pattern of simulation result values may become completely different with respect to the boundary of the region where the discontinuous change occurs. The consistency of the AI model may be reduced by the unusual region 600 for the following reasons:

1) The number of samples included in the unusual region 600 may be extremely small as compared to that of a normal region. Since the AI model prioritizes fitting of a large number of samples located within the normal region, the prediction of a small number of samples within the unusual region 600 may fail. For example, as illustrated in FIG. 10D, in a coordinate space of process variables, a region associated with the unusual situation (e.g., a lower right region defined by the dashed line in FIG. 10D) may have a simulation pattern different from that of the normal region due to sudden changes in physical properties (e.g., reduction in resistance by contact).

2) If the number of samples included in the unusual region 600 is too small, the fitting may become impossible. When the pattern in the unusual region 600 is completely different from the pattern in the normal region, the regression analysis on the samples within the unusual region 600 should be performed using only a small number of samples within the unusual region 600. In some example embodiments, if the number of samples in the unusual region 600 is smaller than the number and type of process variables, it may be impossible to obtain an appropriate regression model because there are countless regression models capable of achieving a minimum error. For example, the number of linear regression models capable of explaining a relationship between three samples having five variables and simulation results may be infinite and may not be specific.

When an extreme lack of samples occurs as described above in 2), it may be very difficult to increase the consistency of the AI model by only improving algorithm, and additional samples for obtaining additional information on the unusual region 600 may be required. When samples to be added are selected within the unusual region 600, the consistency of the AI model may increase efficiently. Accordingly, when the active sampling described with reference to FIGS. 8 and 9 are performed and/or used, samples within the unusual region (e.g., the region where the prediction has failed by the AI model) may be repeatedly included in the training set, and thus higher consistency may be expected even with a small number of samples. For example, when a region where the prediction has failed (or a region where a prediction error is relatively large) occurs in a lower right region of FIG. 10E, the second regression model (e.g., "g(x)") for predicting the first error data may be trained, as illustrated in FIG. 10F. Thereafter, the region where the prediction has failed may be intensively sampled by selecting M samples (represented by squares in FIG. 10F) having higher values of "g(x)" among the M first candidate sample data. As a result, turn-around time (TAT) may be reduced based on the above-described efficient sampling strategy.

FIG. 11 is a flowchart illustrating an example of generating additional sample data in FIG. 6.

Referring to FIGS. 6 and 11, an example where the additional sample data are generated by performing the balanced sampling and the second sample data are generated as the additional sample data by performing operation S210 a first time is illustrated. When the reduction in the consistency of the first regression model is caused by the non-uniformity of the first simulation result data, the balanced sampling may be performed. For example, the balanced sampling may be an operation for uniformly distributing "y" values, which are the first simulation result data. The balanced sampling may be referred to as y-balanced sampling. The descriptions repeated with FIG. 8 will be omitted.

When generating the additional sample data (operation S210), a first histogram of the first simulation result data may be generated (operation S251). For example, the first histogram may be used to check a distribution of the first simulation result data.

To uniformly distribute the "y" values, a large or massive amount of first candidate sample data may be generated (operation S253). Operation S253 may be the same or substantially the same as operation S227 in FIG. 8.

The second sample data may be selected from among the first candidate sample data based on the first histogram (operation S255).

FIG. 12 is a flowchart illustrating an example of selecting second sample data in FIG. 11.

Referring to FIGS. 11 and 12, when selecting the second sample data (operation S255), a sparse interval may be identified in the first histogram (operation S261). The sparse interval may represent an interval in which the number (or density) of simulation result data is less than a reference number. First candidate prediction data may be obtained based on the first regression model and the first candidate sample data (operation S263). The second sample data may be selected from among the first candidate sample data based on the sparse interval and the first candidate prediction data (operation S265).

In some example embodiments, the number of the first candidate sample data may be M, and the number of the first candidate prediction data obtained based on the first candidate sample data may also be M. Each of the M first candidate prediction data may correspond to a respective one of the M first candidate sample data. When the number of the second sample data is equal to the number of the first sample data, N first candidate sample data are selected from among the M first candidate sample data as the second sample data. As described above, it may be advantageous for improving the consistency of the first regression model when the sample are collected so that "y" values are uniformly distributed, and thus the N first candidate sample data selected as the second sample data may correspond to N first candidate prediction data included in the sparse interval from among the M first candidate prediction data.

Although the example where the second sample data are generated as the additional sample data is described with reference to FIGS. 11 and 12, example embodiments are not limited thereto. For example, when the third sample data are generated as the additional sample data by performing operation S210 a second time, the process may also be performed similarly to that described with reference to FIGS. 11 and 12. For example, a second histogram of the first and second simulation result data may be generated, second candidate sample data may be generated, and the third sample data may be selected from among the second candidate sample data based on the second histogram. In addition, a sparse section where the number (or density) of simulation result data is less than the reference number may be identified in the second histogram, second candidate prediction data may be obtained based on the first regression model and the second candidate sample data, and the third sample data may be selected from among the second candidate sample data based on the sparse interval and the second candidate prediction data.

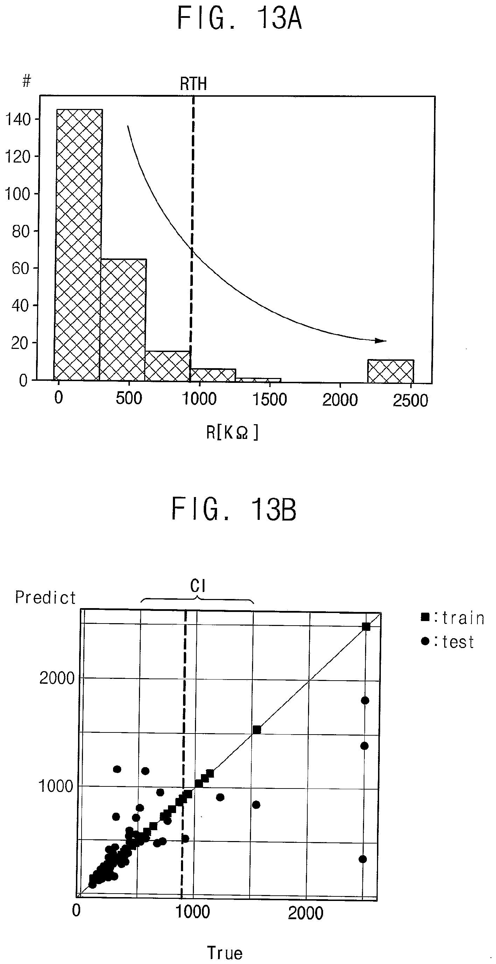

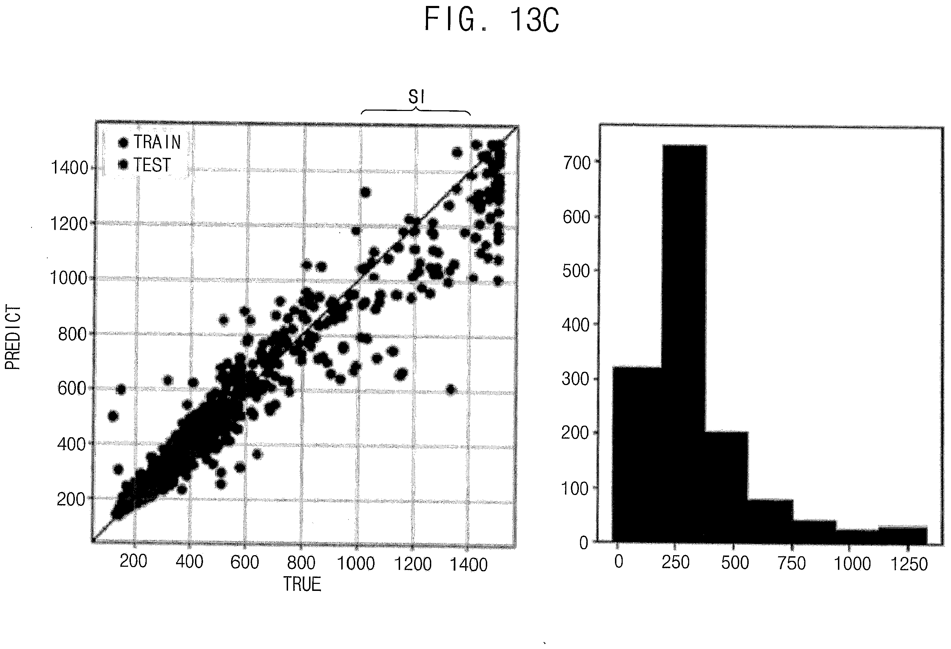

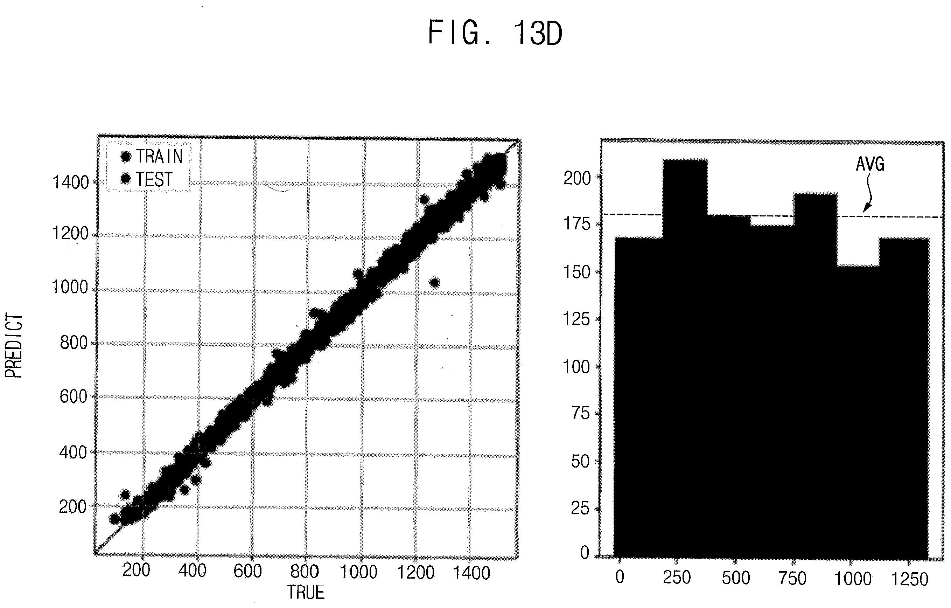

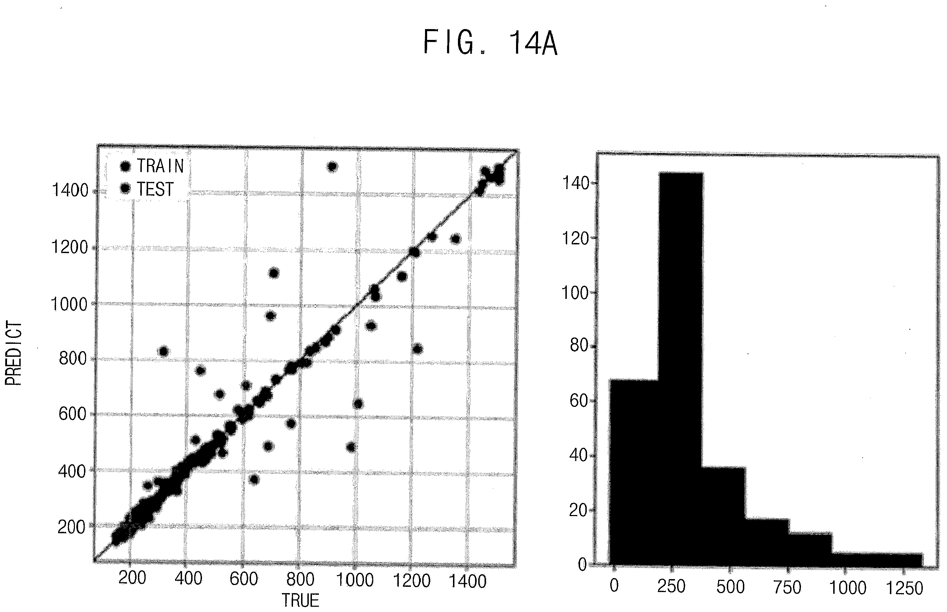

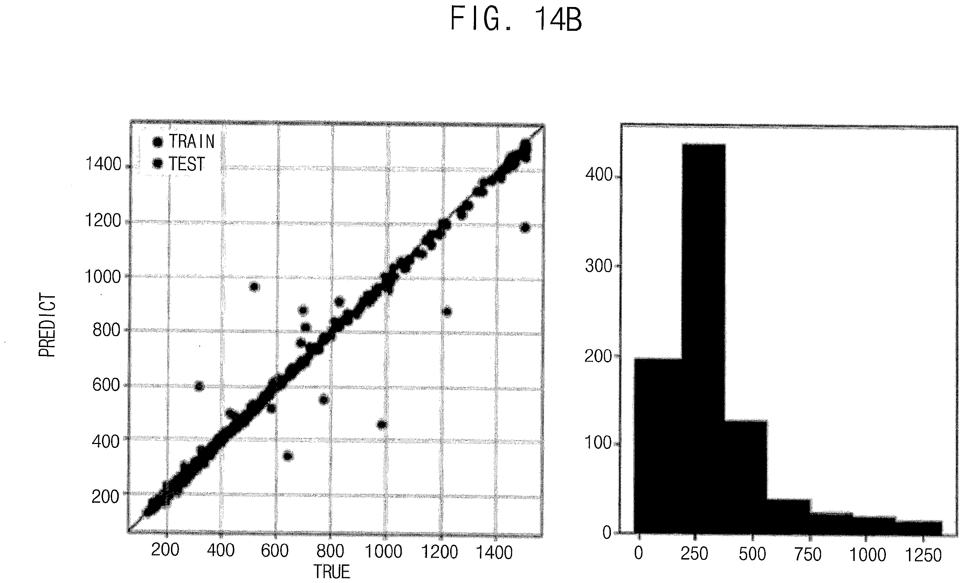

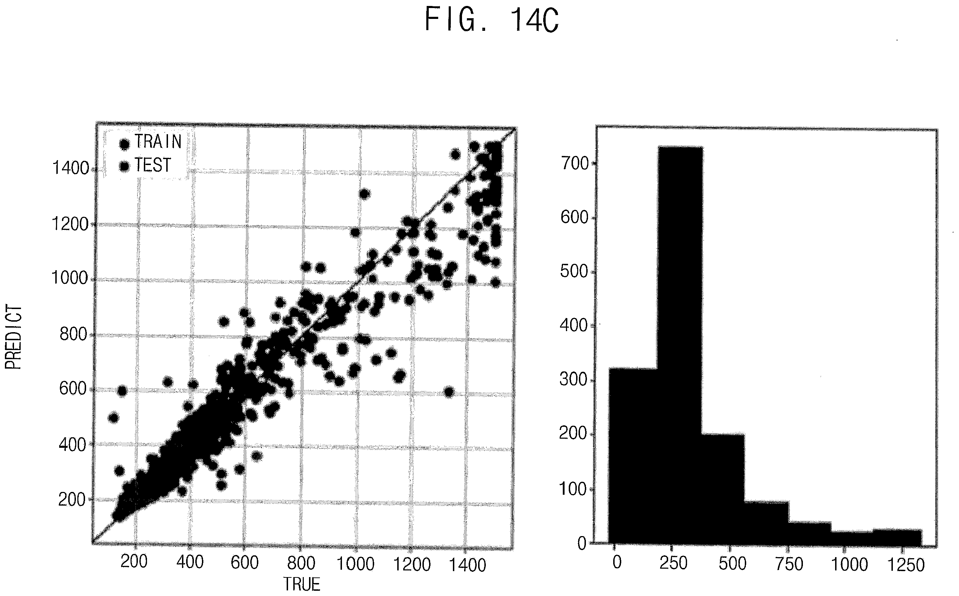

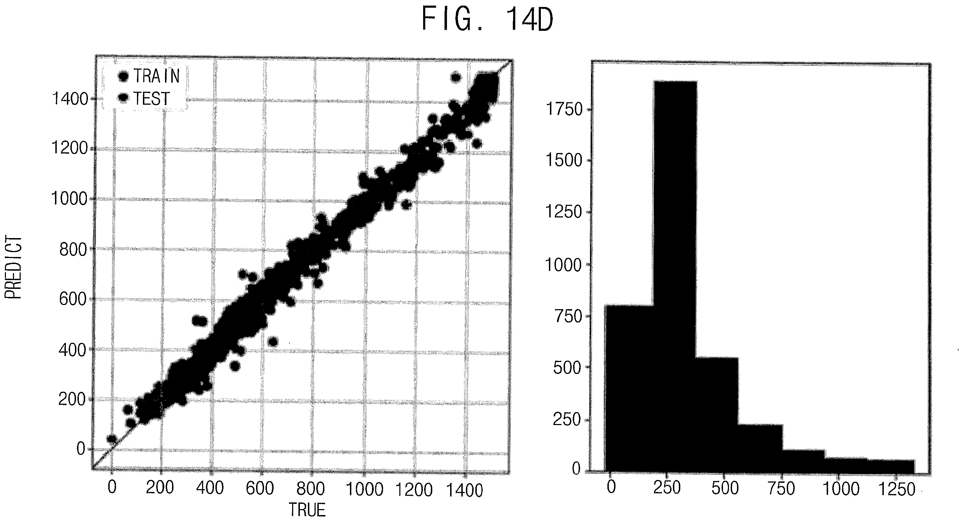

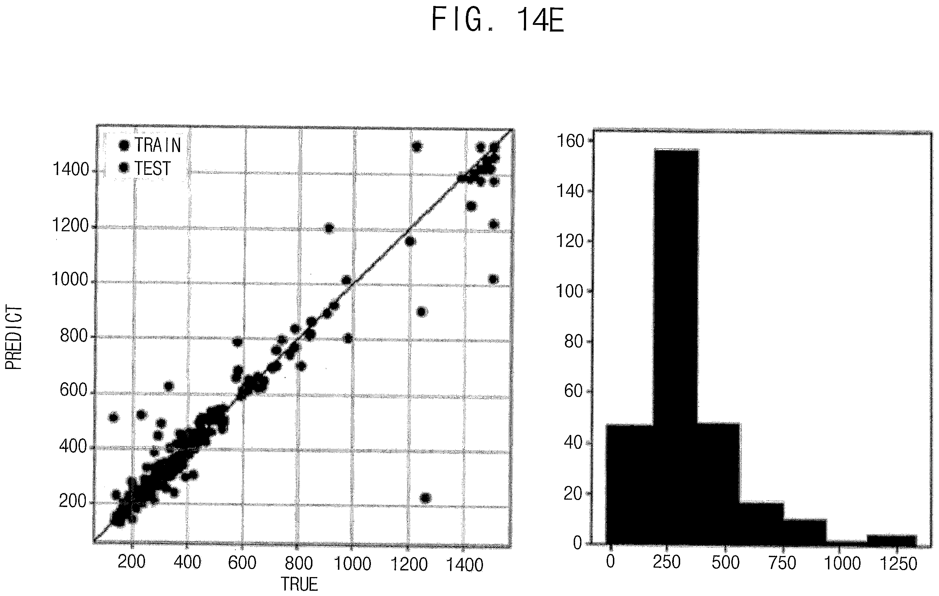

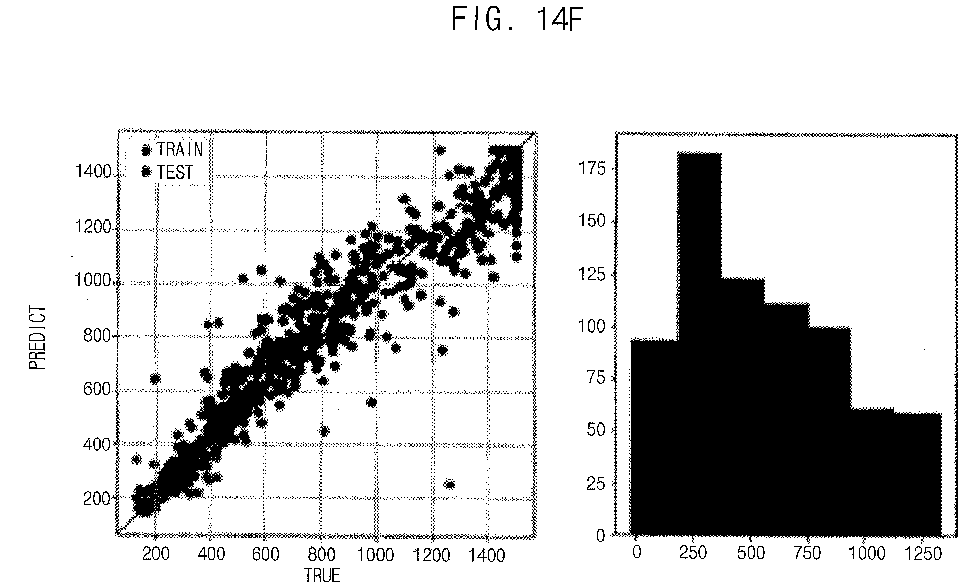

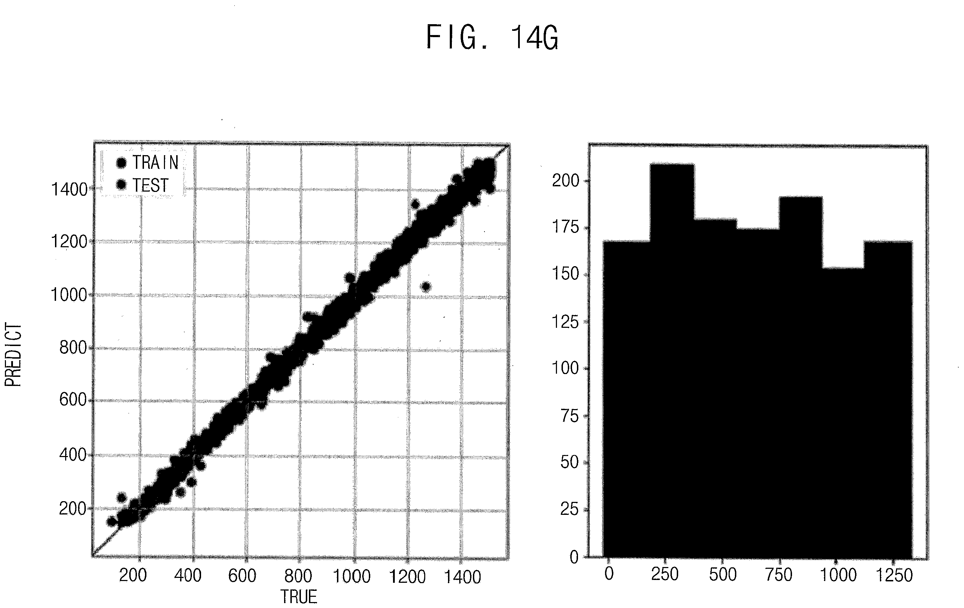

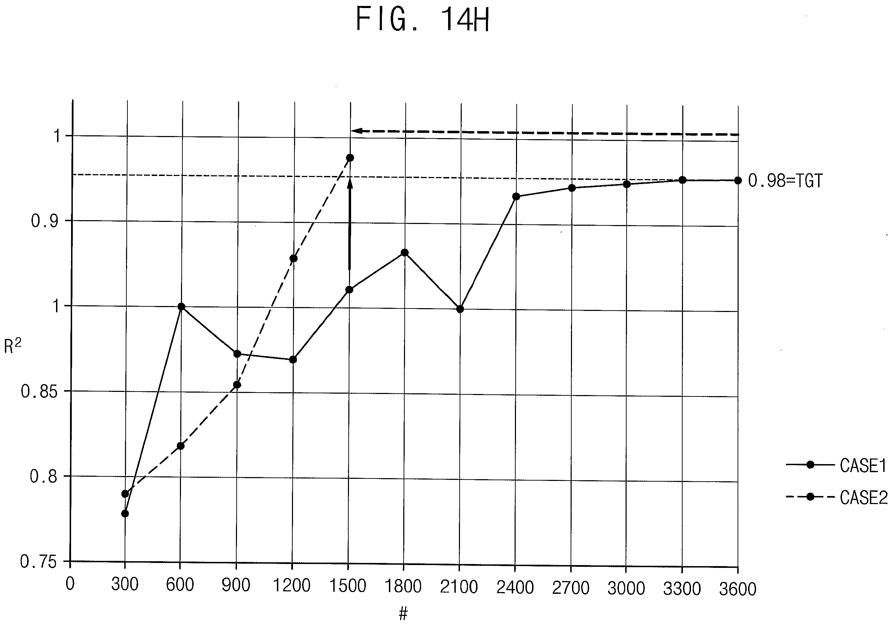

FIGS. 13A, 13B, 13C, 13D, 14A, 14B, 14C, 14D, 14E, 14F, 14G and 14H are diagrams for describing operations of FIGS. 11 and 12.

Referring to FIGS. 13A, 13B, 13C, 13D, 14A, 14B, 14C, 14D, 14E, 14F, 14G and 14H, the non-uniformity, which is another of the major factors that cause the reduction in the consistency of the regression model, will be explained. In addition, a method how to overcome such problem by performing the balanced sampling will be explained.

When a simulation result value "y" changes nonlinearly (e.g., exponentially) according to the change in a process variable "x", the non-uniformity in which the distribution of "y" values is biased to a specific range may occur.

For example, a simulation may be performed to predict an input resistance of a memory cell (e.g., a DRAM cell). For example, as illustrated in FIG. 13A, when the input resistance of the memory cell is greater than a threshold value RTH (e.g., about 900 kΩ), a current may not flow through the memory cell even if a voltage is applied to the memory cell, and thus a defect in which data is not written into the memory cell may occur. In some example embodiments, it may be important to accurately predict a peripheral range (e.g., about 500 to 1500 kS2) of the threshold value RTH to determine whether the defect occurs or not. When samples are generated to be uniformly distributed in the coordinate space using the Sobol algorithm, the distribution of "y" may become sparse as the "y" value increases, because the "y" value increases exponentially when a process variable associated with doping increases linearly.

As described above, when the distribution of "y" is biased to the specific range, there may be a problem that the AI model may fail to predict for a range where "y" values are sparse.

For example, when the distribution of "y" is not uniform as illustrated in FIG. 13B, the prediction performance of the AI model may be degraded or deteriorated as the density of "y" decreases (e.g., as the "y" value increases). In addition, the AI model may prioritize the prediction associated with an interval (e.g., less than about 300 kΩ) with a large "y" density, rather than a critical interval CI (e.g., about 500 to 1500 kS2) for the defect prediction. In FIG. 13B and subsequent figures, "predict" represents values predicted by the AI model, and "true" represents actual simulation result values.

As described above with reference to the active sampling, it may also be very difficult to increase the consistency of the AI model by only improving algorithm, and a process of supplementing information by additionally sampling for the sparse interval is necessary. The exponential relationship between "x" and "y" may frequently occur in the semiconductor design process, and thus the balanced sampling may be applied or employed so that "y" values are uniformly distributed over all intervals. In the balanced sampling described with reference to FIGS. 11 and 12, samples expected to be located in the sparse interval may be generated based on the trained AI model (e.g., it may be checked whether output values from the first regression model associated with the first candidate samples are within the sparse interval), and simulation results may be newly included in the training set, and thus the consistency of the regression model may be rapidly improved. Using the balanced sampling, the "y" values of the training set may be uniformly distributed over all intervals, and the uniform prediction consistency for all intervals may be expected. For example, FIG. 13C illustrates a result of training based on a general random sampling, and FIG. 13D illustrates a result of training based on the balanced sampling according to example embodiments. The results of FIGS. 13C and 13D may be obtained using the same number of sample data. In FIG. 13C, there may be a sparse interval SI when the random sampling is performed, so the consistency of the AI model may be relatively low. In FIG. 13D, the number of data in all intervals of the histogram may be close to an average number AVG and there is no sparse interval because the balanced sampling is performed by intensively sampling a range where the prediction has failed due to sparse "y" values, and thus the consistency of the AI model may be relatively high. As a result, turn-around time may be reduced based on the above-described efficient sampling strategy.

FIGS. 14A, 14B, 14C and 14D illustrate results of training based on the general random sampling. In FIG. 14A, the number of sample data may be 300, and an $R^2$ value representing the consistency of the AI model may be about 0.779. In FIG. 14B, the number of sample data may be 900, and an $R^2$ value representing the consistency of the AI model may be about 0.874. In FIG. 14C, the number of sample data may be 1500, and an $R^2$ value representing the consistency of the AI model may be about 0.912. In FIG. 14D, the number of sample data may be 3600, an $R^2$ value representing the consistency of the AI model may be about 0.981, and a target consistency of 0.98 may be achieved.

FIGS. 14E, 14F and 14G illustrate results of training based on the balanced sampling according to example embodiments. In FIG. 14E, the number of sample data may be 300, and an $R^2$ value representing the consistency of the AI model may be about 0.790. In FIG. 14F, the number of sample data may be 900, and an $R^2$ value representing the consistency of the AI model may be about 0.855. In FIG. 14G, the number of sample data may be 1500, an $R^2$ value representing the consistency of the AI model may be about 0.989, and the target consistency of 0.98 may be achieved.

FIG. 14H illustrates a comparison between a result of training CASE1 based on the general random sampling and a result of training CASE2 based on the balanced sampling according to example embodiments. In the random sampling, the distribution of "y" may be biased in a range smaller than about 500 kQ, and a large amount of samples may be required for training for a region where "y" > 500 kQ. In contrast, in the balanced sampling, the bias in the distribution of "y" may be gradually alleviated and finally eliminated by intensively sampling the region where "y" > 500 kQ, and thus higher consistency may be achieved with a relatively small number of samples. In addition, the consistency improvement process may be automated by adding sample data included in the sparse interval, the AI model with higher consistency may be obtained without an engineer's intervention.

In the modeling method of the neural network according to example embodiments, to improve the consistency of the AI model, an artificial sampling technique for a specific region may be performed. Therefore, samples of input data generated for training the AI model may be biased to the specific region, and it may be checked or determined whether the samples are concentrated in the specific region as follows. When the coordinate space of the input data is divided into V spaces with the same hyper-volume, and when one of the V spaces is $S_v$, an expected value of the number of samples to be included in $S_v$ among N random samples may be $\lambda = N/V$, and a probability that k samples are included in $S_v$ may be based on a Poisson distribution $P(k) = \lambda^k e^{-\lambda}/k!$ . In addition, a probability that more than K samples are found in a specific space $S_v$ may be calculated as a cumulative probability distribution $\int_K^\infty P(k)dk$ . Accordingly, when K samples are found in the specific space $S_v$ in the input data, and when the expected probability value for K is too small (< 0.001), this may mean that the sampling technique for increasing the consistency may be applied or used according to example embodiments.

FIG. 15 is a flowchart illustrating a simulation method according to example embodiments. The descriptions repeated with FIG. 1 will be omitted.

Referring to FIG. 15, a simulation method according to example embodiments may be performed in a semiconductor design process, and may be performed in a system and/or a tool for designing a semiconductor device.

In the simulation method according to example embodiments, a data collection operation and a training operation are performed to generate a first regression model used in the semiconductor design process (operation S 1100). The data collection operation and the training operation in operation S 1100 may be performed the modeling method of the neural network according to example embodiments described with reference to FIGS. 1 through 14.

An inference operation is performed based on the first regression model that has been trained and generated (operation S 1200). The inference operation may represent an operation of predicting performance and defect rate of the semiconductor device by applying the trained first regression model to input data reflecting the process variation. The inference operation may apply the trained first regression model to generate simulation result data representing the semiconductor device, and then may predict one or both of a performance and defect rate of the semiconductor device. The performance and/or defect rate may be determined through inputting the simulation result data into a further model (e.g. a neural network trained to determine one or both of a performance and defect rate of a semiconductor device based on input simulation result data). Alternatively, the simulation result data itself may include a prediction of one or both of a performance and defect rate of the semiconductor device. That is, the first regression model may be trained to output a prediction of one or both of a performance and defect rate of the semiconductor device.

In some example embodiments, the semiconductor design process in which the simulation method according to example embodiments is performed may include a behavior level design (or behavior level design process) of the semiconductor device, a register transfer level (RTL) design (or RTL design process) of the semiconductor device, a gate level design (or gate level design process) of the semiconductor device, a layout level design (or layout level design process) of the semiconductor device, or the like. The simulation method according to example embodiments may be performed in the layout level design.

The behavior level design may be referred to as an architecture design or a high level design (or high level design process). The high level design may represent that a semiconductor device to be designed or as a target device is depicted at an algorithm level and is described in terms of high-level computer language (e.g., C language).

Devices and/or circuits designed by the high level design process may be more concretely described by an RTL coding or simulation. In addition, code generated by the RTL coding may be converted into a netlist, and the results may be combined with each other to realize the entire semiconductor device. The combined schematic circuit may be verified by a simulation tool. In some example embodiments, an adjusting operation may be further performed in consideration of a result of the verification. The RTL may be used for representing a coding style used in hardware description languages for effectively ensuring that code models may be synthesized in a certain hardware platform such as an FPGA or an ASIC (e.g., code models may be converted into real logic functions). A plurality of hardware description languages may be used for generating RTL modules. For example, the plurality of hardware description languages may include System Verilog, Verilog, VHSIC hardware description language (VHDL), or the like.

The gate level design may represent that a semiconductor device is depicted using basic logic gates, such as AND gates and OR gates, and is described by logical connections and timing information of the logic gates. For example, all signals may be discrete signals and may only have a logical value of zero, one, X and Z (or high-Z).

The layout level design may be referred to as a physical design (or physical design process). The layout level design may be performed to implement or realize a logically completed semiconductor device on a silicon substrate. For example, the layout level design may be performed based on the schematic circuit prepared in the high level design or the netlist corresponding thereto. The layout level design may include a routing operation of placing and connecting various standard cells that are provided from a cell library, based on a predetermined or alternatively, desired design rule.

FIG. 16 is a flowchart illustrating an example of performing an inference operation in FIG. 15.

Referring to FIGS. 15 and 16, when performing the inference operation (operation S1200), first input data associated with the at least one of the conditions of the manufacturing process of the semiconductor device and the characteristics of the semiconductor device may be set (operation S1210), and the first input data may be sampled (operation S1220). For example, the sampling operation may be performed based on a Monte Carlo scheme.

The sampled first input data may be inferred based on the first regression model that has been trained and generated in operation S1100 (operation S1230) (e.g. the sampled first input data may be input into the first regression model to output simulation result data), and at least one of the predicting the defect rate of the semiconductor device and the optimizing the semiconductor device may be performed based on a result of inferring the sampled first input data (operation S1240). When optimizing the semiconductor device, at least one of the defect rate and performance of the semiconductor device may be determined, and if the at least one of the defect rate and performance do not meet a particular criterion (e.g. a corresponding defect rate threshold or a corresponding performance threshold), then the method may be repeated with re-sampled input data. The method may be repeated from operation S1220 (e.g. based on the same conditions of the manufacturing process of the semiconductor device and characteristics of the semiconductor device) or from operation S 1210 (e.g. based on adjusted conditions of the manufacturing process of the semiconductor device and/or adjusted characteristics of the semiconductor device). In response to the at least one of the defect rate and performance meeting the criterion (e.g. in response to the defect rate being below a defect rate threshold, and/or in response to the performance being above a performance threshold) then at least one or both of the conditions of the semiconductor manufacturing process and characteristics of the semiconductor may be output. These details may be output for manufacture. For instance, the output may include parameters for use in manufacturing the optimized semiconductor device (e.g. according to an optimized method of manufacture). Furthermore, the output may include instructions (e.g. computer readable instructions) for controlling a semiconductor manufacturing system to manufacture the optimized semiconductor device. The instructions, when executed or implemented by the semiconductor manufacturing system, may control the semiconductor manufacturing system to manufacture the optimized semiconductor device.

When the data collection operation, the training operation and the inference operation are performed as described above, the process variation for simulation targets may be efficiently managed.

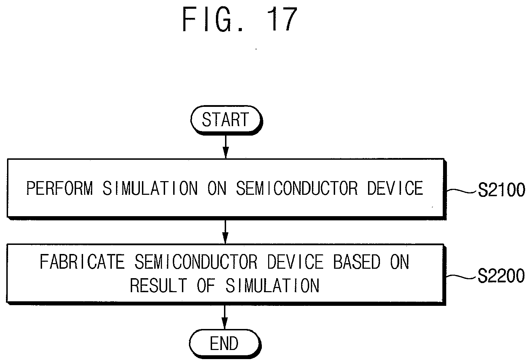

FIG. 17 is a flowchart illustrating a manufacturing method of a semiconductor device according to example embodiments.

Referring to FIG. 17, in a manufacturing method of a semiconductor device according to example embodiments, a simulation is performed on the semiconductor device (operation S2100), and the semiconductor device is fabricated based on a result of the simulation on the semiconductor device (operation S2200). Operation S2100 may be performed based on the simulation method according to example embodiments described with reference to FIG. 15.

In operation S2200, the semiconductor device may be fabricated or manufactured by a mask, a wafer, a test, an assembly, packaging, and the like. For example, a corrected layout may be generated by performing optical proximity correction on the design layout, and a photo mask may be fabricated or manufactured based on the corrected layout. For example, various types of exposure and etching processes may be repeatedly performed using the photo mask, and patterns corresponding to the layout design may be sequentially formed on a substrate through these processes. Thereafter, the semiconductor device may be obtained in the form of a semiconductor chip through various additional processes.

Any of the elements and/or functional blocks disclosed above may include or be implemented in processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc. The processing circuitry may include electrical components such as at least one of transistors, resistors, capacitors, etc. The processing circuitry may include electrical components such as logic gates including at least one of AND gates, OR gates, NAND gates, NOT gates, etc.

As will be appreciated by those skilled in the art, the inventive concepts may be embodied as a system, method, computer program product, and/or a computer program product embodied in one or more computer readable medium(s) having computer readable program code embodied thereon. The computer readable program code may be provided to a processor of a general purpose computer, special purpose computer, or other programmable data processing apparatus. The computer readable medium may be a computer readable signal medium or a computer readable storage medium. The computer readable storage medium may be any tangible medium that can contain or store a program for use by or in connection with an instruction execution system, apparatus, or device. For example, the computer readable medium may be a non-transitory computer readable medium.

The inventive concepts may be applied to design various electronic devices and systems that include the semiconductor devices and the semiconductor integrated circuits. For example, the inventive concepts may be applied to systems such as a personal computer (PC), a server computer, a data center, a workstation, a mobile phone, a smart phone, a tablet computer, a laptop computer, a personal digital assistant (PDA), a portable multimedia player (PMP), a digital camera, a portable game console, a music player, a camcorder, a video player, a navigation device, a wearable device, an internet of things (IoT) device, an internet of everything (IoE) device, an e-book reader, a virtual reality (VR) device, an augmented reality (AR) device, a robotic device, a drone, an automotive, etc.

The foregoing is illustrative of example embodiments and is not to be construed as limiting thereof. Although some example embodiments have been described, those skilled in the art will readily appreciate that many modifications are possible in the example embodiments without materially departing from the novel teachings and advantages of the example embodiments. Accordingly, all such modifications are intended to be included within the scope of the example embodiments as defined in the claims. Therefore, it is to be understood that the foregoing is illustrative of various example embodiments and is not to be construed as limited to the specific example embodiments disclosed, and that modifications to the disclosed example embodiments, as well as other example embodiments, are intended to be included within the scope of the appended claims.

## Claims

**1.** A modeling method of a neural network, the modeling method being performed by executing program code by at least one processor, the modeling method comprising:

training a first regression model based on first sample data and first simulation result data, the first regression model being used to predict the first simulation result data from the first sample data, the first sample data representing at least one of conditions of a manufacturing process of a semiconductor device and characteristics of the semiconductor device, the first simulation result data being obtained by performing a simulation on the first sample data; and
in response to a consistency of the first regression model being lower than a target consistency, re-training the first regression model based on second sample data different from the first sample data, the second sample data being associated with a consistency reduction factor of the first regression model that is responsible for a prediction failure of the first regression model.

**2.** The modeling method of claim 1, wherein a reduction in the consistency of the first regression model is caused by a discontinuity of the first simulation result data.

**3.** The modeling method of claim 2, wherein the re-training the first regression model includes:

performing an active sampling for obtaining the second sample data;
obtaining second simulation result data by performing a simulation on the second sample data; and
re-training the first regression model such that the first and second simulation result data are predicted from the first and second sample data.

**4.** The modeling method of claim 3, wherein the performing the active sampling includes:

obtaining first prediction data based on the first regression model and the first sample data;
calculating first error data representing errors between the first simulation result data and the first prediction data;
training a second regression model, the second regression model being used to predict the first error data from the first sample data;
generating first candidate sample data; and
selecting the second sample data from among the first candidate sample data based on the second regression model.

**5.** The modeling method of claim 4, wherein the selecting the second sample data includes:

obtaining first error prediction data based on the second regression model and the first candidate sample data; and
selecting the second sample data from among the first candidate sample data based on the first error prediction data.

**6.** The modeling method of claim 5, wherein:

a number of the first candidate sample data and a number of the first error prediction data is M, respectively, where M is a natural number greater than or equal to two,
each of the M first error prediction data corresponds to a respective one of the M first candidate sample data,
N first candidate sample data are selected from among the M first candidate sample data as the second sample data, where N is a natural number less than M, and
the N first candidate sample data selected as the second sample data correspond to N first error prediction data having larger values from among the M first error prediction data.

**7.** The modeling method of any of claims 4-6, wherein:

a number of the first candidate sample data is less than a number of the first sample data, and
a number of second sample data is equal to the number of first sample data.

**8.** The modeling method of claim 1, wherein a reduction in the consistency of the first regression model is caused by a non-uniformity of the first simulation result data.

**9.** The modeling method of claim 8, wherein the re-training the first regression model includes:

performing a balanced sampling for obtaining the second sample data;
obtaining second simulation result data by performing a simulation on the second sample data; and
re-training the first regression model such that the first and second simulation result data are predicted from the first and second sample data.

**10.** The modeling method of claim 9, wherein the performing the balanced sampling includes:

generating a first histogram of the first simulation result data;
generating first candidate sample data; and
selecting the second sample data from among the first candidate sample data based on the first histogram.

**11.** The modeling method of claim 10, wherein the selecting the second sample data includes:

identifying a sparse interval in the first histogram, the sparse interval representing an interval in which a number of simulation result data is less than a reference number;
obtaining first candidate prediction data based on the first regression model and the first candidate sample data; and
selecting the second sample data from among the first candidate sample data based on the sparse interval and the first candidate prediction data.

**12.** The modeling method of claim 11, wherein:

a number of the first candidate sample data and a number of the first candidate prediction data is M, respectively, where M is a natural number greater than or equal to two,
each of the M first candidate prediction data corresponds to a respective one of the M first candidate sample data,
N first candidate sample data are selected from among the M first candidate sample data as the second sample data, where N is a natural number less than M, and
the N first candidate sample data selected as the second sample data correspond to N first candidate prediction data included in the sparse interval from among the M first candidate prediction data.

**13.** The modeling method of any preceding claim, wherein the training the first regression model includes:

setting a simulation target and an analysis range;
generating the first sample data within the analysis range;
obtaining the first simulation result data by performing the simulation on the first sample data;
training the first regression model based on the first sample data and the first simulation result data; and
checking the consistency of the first regression model.

**14.** The modeling method of claim 13, wherein the checking the consistency of the first regression model includes:

obtaining first prediction data based on the first regression model and the first sample data;
calculating the consistency of the first regression model based on the first prediction data and the first simulation result data; and
comparing the consistency of the first regression model with the target consistency.

**15.** A simulation method performed by executing program code by at least one processor, the simulation method comprising:

performing a data collection operation and a training operation to generate a first regression model used in a semiconductor design process; and
performing an inference operation based on the generated first regression model,
wherein the performing the data collection operation and the training operation includes performing the modeling method of any preceding claim.

FIG. 1

START
TRAIN FIRST REGRESSION MODEL BASED ON FIRST SAMPLE DATA AND FIRST SIMULATION RESULT DATA
S100
WHEN CONSISTENCY OF FIRST REGRESSION MODEL IS LOWER THAN TARGET CONSISTENCY, RE-TRAIN FIRST REGRESSION MODEL BASED ON SECOND SAMPLE DATA
S200
END

FIG. 2

START
TRAIN FIRST REGRESSION MODEL
S100
S203
RE-TRAIN FIRST REGRESSION MODEL
S201
TARGET CONSISTENCY?
NO
YES
END

1000
1200
STORAGE DEVICE
1320
LEARNING MODULE
MD
1300
1310
DATA COLLECTION MODULE
INFERENCE MODULE
1330
1100
PROCESSOR

FIG. 3

FIG. 4

2000
2100
PROCESSOR
2200
I/O
DEVICE
2300
NETWORK
INTERFACE
RAM
PR
2400
ROM
2500
STORAGE
DEVICE
PR
2600

FIG. 5A
IDAT
IL
x1
x2
xi
HL1
HL2
HLn
OL
y1
y2
yj
ODAT

FIG. 5B

a1
w1
a2
w2
ND
w3
a3
wN
aN
$\sigma\left(b + \sum_{i=1}^{N} a_i w_i\right)$

FIG. 5C

IDAT
NN1
NN2
NNK
ODAT1
ODAT2
ODATK
FODAT

FIG. 6

START
SET SIMULATION TARGET AND ANALYSIS RANGE
S110
GENERATE SAMPLE DATA
S120
PERFORM SIMULATION
S130
TRAIN FIRST REGRESSION MODEL
S140
S210
GENERATE ADDITIONAL SAMPLE DATA
S150
CHECK CONSISTENCY
FAIL
PASS
END

FIG. 7

START
OBTAIN PREDICTION DATA
S151
CALCULATE CONSISTENCY OF FIRST REGRESSION MODEL
S153
S155
CALCULATED CONSISTENCY < TARGET CONSISTENCY ?
YES
TO S210
NO
END

FIG. 8

START
OBTAIN FIRST PREDICTION DATA
S221
CALCULATE FIRST ERROR DATA
S223
TRAIN SECOND REGRESSION MODEL
S225
GENERATE FIRST CANDIDATE SAMPLE DATA
S227
SELECT SECOND SAMPLE DATA BASED ON SECOND REGRESSION MODEL
S229
END

FIG. 9

START
OBTAIN FIRST ERROR PREDICTION DATA
S231
SELECT SECOND SAMPLE DATA BASED ON FIRST ERROR PREDICTION DATA
S233
END

FIG. 10A

510
$\mu_1$
DEPTH
25
WIDTH
550

# FIG. 10B

520
μ2
DEPTH
21
WIDTH
550

FIG. 10C

μ1 - 3σ
μ2 + 3σ
μ1
μ2
DEPTH
20
21
25
26
600
WIDTH

FIG. 10D

$\mu_1 - 3\sigma$
$\mu_1$
$\mu_2$
$\mu_2 + 3\sigma$
20
21
22
23
24
25
26
DEPTH
10
12
14
16
WIDTH
55
60
65
70

FIG. 10E

$e = |y - f(x)|$
DEPTH
20
21
22
23
24
25
26
10
12
14
16
WIDTH
0.0
0.1
0.2
0.3
0.4

FIG. 10F

$g(x)$
DEPTH
20
21
22
23
24
25
26
10
12
14
16
WIDTH
0.0
0.1
0.2
0.3
0.4

FIG. 11

START
GENERATE FIRST HISTOGRAM
S251
GENERATE FIRST CANDIDATE SAMPLE DATA
S253
SELECT SECOND SAMPLE DATA BASED ON FIRST HISTOGRAM
S255
END

FIG. 12

START
IDENTIFY SPARSE INTERVAL
S261
OBTAIN FIRST CANDIDATE PREDICTION DATA
S263
SELECT SECOND SAMPLE DATA BASED ON SPARSE INTERVAL AND FIRST CANDIDATE PREDICTION DATA
S265
END

FIG. 13A

#
RTH
140
120
100
80
60
40
20
0
0
500
1000
1500
2000
2500
R[KΩ]

FIG. 13B

Predict
CI
■:train
●:test
2000
1000
0
1000
2000
True

FIG. 13C
SI
TRAIN
TEST
PREDICT
TRUE
1400
1200
1000
800
600
400
200
200
400
600
800
1000
1200
1400
700
600
500
400
300
200
100
0
0
250
500
750
1000
1250

FIG. 13D

AVG
TRAIN
TEST
TRUE
PREDICT

TRAIN
TEST
PREDICT
TRUE
200
400
600
800
1000
1200
1400
0
20
40
60
80
100
120
140
250
500
750
1000
1250

FIG. 14A

TRAIN
TEST
PREDICT
TRUE
200
400
600
800
1000
1200
1400
0
100
200
300
400
0
250
500
750
1000
1250

FIG. 14B

FIG. 14C

TRAIN
TEST
PREDICT
TRUE
200
400
600
800
1000
1200
1400
0
100
200
300
400
500
600
700
0
250
500
750
1000
1250

TRAIN
TEST
PREDICT
TRUE
0
200
400
600
800
1000
1200
1400
0
250
500
750
1000
1250
1500
1750

FIG. 14D

FIG. 14E

TRAIN
TEST
PREDICT
TRUE

FIG. 14F

TRAIN
TEST
PREDICT
TRUE
200
400
600
800
1000
1200
1400
0
25
50
75
100
125
150
175
200
250
500
750
1000
1250

FIG. 14G

FIG. 14H
0.98=TGT
CASE1
CASE2
1
0.9
1
0.85
0.8
0.75
R²
0
300
600
900
1200
1500
1800
2100
2400
2700
3000
3300
3600
#

FIG. 15

START
PERFORM DATA COLLECTION OPERATION AND TRAINING OPERATION
S1100
PERFORM INFERENCE OPERATION
S1200
END

FIG. 16

START
SET INPUT DATA
S1210
SAMPLE INPUT DATA
S1220
INFER SAMPLED INPUT DATA
S1230
PERFORM AT LEAST ONE OF PREDICTING DEFECT RATE AND OPTIMIZING
S1240
END

FIG. 17

START
PERFORM SIMULATION ON SEMICONDUCTOR DEVICE
S2100
FABRICATE SEMICONDUCTOR DEVICE BASED ON RESULT OF SIMULATION
S2200
END

Europäisches Patentamt
European Patent Office
Office européen des brevets

# EUROPEAN SEARCH REPORT

Application Number
EP 23 18 3224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/320366 A1 (WANG JING [US] ET AL) 8 October 2020 (2020-10-08)<br>* abstract *<br>* paragraph [0005] *<br>* paragraph [0015] - paragraph [0029] *<br>* paragraph [0040] - paragraph [0042] *<br>* paragraph [0044] - paragraph [0052] *<br>* paragraph [0055] - paragraph [0060] *<br>* paragraph [0083] - paragraph [0093] *<br>----- | 1-15 | INV.<br>G06F30/27<br>G06F30/39<br><br>ADD.<br>G06F119/18<br>G06F119/22 |
| X | US 2022/207351 A1 (SARKAR TIRTHAJYOTI [US] ET AL) 30 June 2022 (2022-06-30)<br>* abstract *<br>* paragraph [0004] *<br>* paragraph [0006] - paragraph [0008] *<br>* paragraph [0022] - paragraph [0030] *<br>* paragraph [0033] - paragraph [0034] *<br>* paragraph [0038] *<br>* paragraph [0042] - paragraph [0044] *<br>* paragraph [0052] - paragraph [0055] *<br>* paragraph [0066] - paragraph [0079] *<br>----- | 1-15 | TECHNICAL FIELDS SEARCHED (IPC) |
| X | US 2022/114317 A1 (WANG JING [US] ET AL) 14 April 2022 (2022-04-14)<br>* abstract *<br>* paragraph [0002] *<br>* paragraph [0005] - paragraph [0014] *<br>* paragraph [0020] - paragraph [0023] *<br>* paragraph [0029] - paragraph [0031] *<br>* paragraph [0045] - paragraph [0049] *<br>* paragraph [0066] - paragraph [0073] *<br>* paragraph [0088] - paragraph [0090] *<br>* paragraph [0133] *<br>-----<br>-/-- | 1-15 | G06F |

The present search report has been drawn up for all claims

2

| Place of search | Date of completion of the search | Examiner |
|---|---|---|
| Munich | 5 December 2023 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches
Patentamt
European
Patent Office
Office européen
des brevets

# EUROPEAN SEARCH REPORT

Application Number
EP 23 18 3224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEEPTHI AMURU ET AL: "AI/ML Algorithms and Applications in VLSI Design and Technology", ARXIV.ORG, CORNELL UNIVERSITY LIBRARY, 201 OLIN LIBRARY CORNELL UNIVERSITY ITHACA, NY 14853, 21 February 2022 (2022-02-21), XP091162310, * abstract * * page 1 - page 2, column 1 * * page 3, column 2, paragraph 3 - page 23 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 5 December 2023 | Radev, Boyan |

2

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 2 of 2

## ANNEX TO THE EUROPEAN SEARCH REPORT ON EUROPEAN PATENT APPLICATION NO.

EP 23 18 3224

This annex lists the patent family members relating to the patent documents cited in the above-mentioned European search report. The members are as contained in the European Patent Office EDP file on The European Patent Office is in no way liable for these particulars which are merely given for the purpose of information.

05-12-2023

| Patent document cited in search report | Publication date | Patent family member(s) | Publication date |
|---|---|---|---|
| US 2020320366 A1 | 08-10-2020 | CN 111797581 A | 20-10-2020 |
| | | KR 20200119192 A | 19-10-2020 |
| | | US 2020320366 A1 | 08-10-2020 |
| US 2022207351 A1 | 30-06-2022 | NONE | |
| US 2022114317 A1 | 14-04-2022 | KR 20220048941 A | 20-04-2022 |
| | | US 2022114317 A1 | 14-04-2022 |

EPO FORM P0459

For more details about this annex : see Official Journal of the European Patent Office, No. 12/82